# EUROPÄISCHE PATENTSCHRIFT

(11) **EP 2 961 121 B1**
(45) Veröffentlichungstag und Bekanntmachung des Hinweises auf die Patenterteilung: **06.06.2018**
(21) Anmeldenummer: 15173436.5
(22) Anmeldetag: 30.06.2000
(51) Int. Cl.: H04L 27/36, H04W 36/04

(54) **MOBILSTATION ZUR ÜBERTRAGUNG VON SIGNALISIERUNGSINFORMATIONEN**
MOBILE STATION FOR TRANSFERRING SIGNALLING INFORMATION
STATION MOBILE POUR TRANSMISSION D'INFORMATIONS DE SIGNALISATION

(30) Priorität: 30.08.1999 DE 19941432; 08.09.1999 DE 19942768
(43) Veröffentlichungstag der Anmeldung: 30.12.2015
(62) Teilanmeldung aus: 10182887.9
(73) Patentinhaber: IPCom GmbH & Co. KG, 82049 Pullach (DE)
(72) Erfinder: Hans, Martin, 31162 Bad Salzdetfurth (DE); Laumen, Josef, 85375 Neufahrn (DE); Beckmann, Mark, 31789 Hameln (DE); Deichmann, Volker, 82049 Pullach (DE)
(74) Vertreter: 2s-ip Schramm Schneider Bertagnoll Patent- und Rechtsanwälte Part mbB

(56) Entgegenhaltungen:
- WO-A1-98/28888
- WO-A1-99/35872
- WO-A2-98/23122
- US-A- 5 872 814

## Beschreibung

Die Erfindung geht von einer Mobilstation nach der Gattung des Anspruchs 1 aus.

Aus EP 0888026 A2 ist ein Verfahren bekannt, in dem Zusatzinformationen mit den Signalisierungsinformationen zwischen der Sendestation, insbesondere einer Basisstation, und Empfangsstation, insbesondere einer Mobilstation, übertragen werden. Dabei beziehen sich diese Zusatzinformationen auf die Dienstgüte, die von einer Basisstation angeboten wird.

Aus WO 98106226 A2 ist ein Verfahren bekannt, bei dem zwischen Mobile Switching Centers (MSCs) in Signalisierungsnachrichten eine Information übertragen wird, welche signalisiert, ob das zu übertragende Sprachsignal kodiert wird und gegebenenfalls mit welcher Qualität die Kodierung des Sprachsignals durchgeführt wird.

Aus der Veröffentlichung "RRC Protocol Specification", TS 25.331 v.1,1.0, 3 GPP TSG RAN WO 1) ist es bereits bekannt, Signalisierungsinformationen zwischen einer Basisstation und einer Mobilstation zu übertragen, um mindestens einen Übertragungskanal zwischen der Basisstation und der Mobilstation einzurichten, der speziell einem Datenaustausch zwischen der Basisstation und der Mobilstation gewidmet ist. Für einen solchen Übertragungskanal kann die Impulsantwort geschätzt und die geschätzte Impulsantwort zur Vorverzerrung des zu sendenden Signals verwendet werden, so daß in der empfangenden Station Mittel zur Entzerrung eingespart werden können. Ein solches Verfahren zur Vorverzerrung Ist das aus der Veröffentlichung "Summary of Joint Predistortion", TSGRAN WG1 bekannte Joint Predistortion Verfahren.

WO 99/35872 betrifft eine Mobilstation gemäß dem Oberbegriff des Anspruchs 1. US 5 872 814 A betrifft ein Verfahren zur Linearisierung der Funkübertragungselektronik unter Verwendung von Basisband-Vorverzerrung in Sende-/Empfangsausgleichspilotsignalen.

Aufgabe der Erfindung ist es, Lösungen bereitzustellen, die einen verbesserten Datenempfang an einer Empfangsstation gewährleisten.

### Vorteile der Erfindung

Diese Aufgabe wird mit der Mobilstation nach Anspruch 1 gelöst.

Die Erfindung bietet den Vorteil, dass mit den Signalisierungsinformationen eine dritte Nachricht von der Sendestation an die Empfangsstation übertragen wird, die eine Information darüber enthält, ob in der Sendestation oder in einer nachfolgend der Empfangsstation zugeordneten weiteren Sendestation eine Aufbereitung von zu sendenden Daten zur Erhöhung der Empfangsqualität dieser Daten an der Empfangsstation durchgeführt wird. Auf diese Weise kann die Empfangsstation vor Einrichtung eines Übertragungskanals von der Sendestation zur Empfangsstation entscheiden, wie sie die von der Sendestation oder die von der nachfolgend der Empfangsstation zugeordneten weiteren Sendestation zu sendenden Daten detektieren muss, um einen optimalen Datenempfang gewährleisten zu können. Stellt die Empfangsstation dabei fest, dass die von der entsprechenden Sendestation zu sendenden Daten in der entsprechenden Sendestation bereits aufbereitet wurden, so kann sie auf eine aufwendige Entzerrung verzichten, da die Daten mit einer entsprechend erhöhten Empfangsqualität an der Empfangsstation ankommen. Auf diese Weise kann der Leistungsverbrauch an der Empfangsstation minimiert werden, was besonders bei Ausbildung der Empfangsstation als mobile Station mit Akkumulatorbetrieb von Vorteil ist.

Durch die in den Unteransprüchen aufgeführten Maßnahmen sind vorteilhafte Weiterbildungen und Verbesserungen der Verfahren, der Sendestation und der Empfangsstation gemäß den entsprechenden unabhängigen Ansprüchen möglich.

Dabei ist es besonders vorteilhaft, dass mit der dritten Nachricht eine Information darüber von der Sendestation an die Empfangsstation übertragen wird, welcher Art die Aufbereitung der zu sendenden Daten ist. Auf diese Weise lässt sich die in der Empfangsstation gegebenenfalls erforderliche Entzerrung weiter differenzieren, so dass die Entzerrung in der Empfangsstation für den einzurichtenden Übertragungskanal optimal an die Aufbereitung der zu sendenden Signale angepasst werden kann. Auf diese Weise ist eine weitere Optimierung bzw. Minimierung des Leistungsverbrauchs in der Empfangsstation realisierbar. Außerdem kann eine fehlerhafte Entzerrung, die nicht an die Art der Aufbereitung der zu sendenden Daten angepasst ist, vermieden werden.

Ein weiterer Vorteil besteht darin, dass die dritte Nachricht bezüglich mehrerer

Übertragungskanäle für die Übertragung der zu sendenden Daten übertragen wird, wenn die Art der Aufbereitung in diesen Übertragungskanälen gleich ist. Auf diese Weise kann die für die Übertragung der dritten Nachricht erforderliche Datenmenge minimiert werden.

Ein weiterer Vorteil besteht darin, dass mit den Signalisierungsinformationen vor der dritten Nachricht eine zweite Nachricht von der Empfangsstation zur Sendestation übertragen wird, die eine Information darüber enthält, welche Art oder welche Arten von Aufbereitung der von der Sendestation zu sendenden Daten von der Empfangsstation zur Detektion dieser Daten unterstützt wird bzw. unterstützt werden. Auf diese Weise kann verhindert werden, dass die Sendestation die an die Empfangsstation zu sendenden Daten in einer Weise aufbereitet, in der sie von der Empfangsstation nicht oder nur eingeschränkt entzerrt werden können. Vielmehr kann die Sendestation die Aufbereitung der an die Empfangsstation zu sendenden Daten an die von der Empfangsstation unterstützten Detektions- oder Entzerrungsmechanismen anpassen, um eine optimale Übertragung zu gewährleisten.

Ein weiterer Vorteil besteht darin, dass als zu sendende Daten die Signalisierungsinformationen von der Sendestation zur Empfangsstation frühestens dann aufbereitet übertragen werden, wenn anhand der zweiten Nachricht die von der Empfangsstation unterstützte Art bzw. die von der Empfangsstation unterstützten Arten der Aufbereitung bei der Sendestation bekannt sind, wobei die Aufbereitung in einer von der Empfangsstation unterstützten Art erfolgt, und wenn die dritte Nachricht an die Empfangsstation abgesetzt wurde. Auf diese Weise können bereits Signalisierungsinformationen vor Einrichten des speziellen Übertragungskanals von der Sendestation zur Empfangsstation in der Sendestation so aufbereitet werden, dass ihre Empfangsqualität an der Empfangsstation erhöht wird und somit in der Empfangsstation weniger Aufwand für deren Entzerrung erforderlich ist, so dass möglichst frühzeitig Entzerrungsaufwand in der Empfangsstation und damit Leistungsverbrauch eingespart werden kann.

Ein weiterer Vorteil besteht darin, dass mit den Signalisierungsinformationen vor der dritten Nachricht eine erste Nachricht von der Sendestation zur Empfangsstation übertragen wird, die eine Information darüber enthält, welche Art oder welche Arten von Aufbereitung der zu sendenden Daten von der Sendestation unterstützt wird bzw. unterstützt werden. Auf diese Weise kann die Empfangsstation eine Aufbereitungsart der zu sendenden Daten auswählen und die ausgewählte Aufbereitungsart mittels der zweiten Nachricht der Sendestation bekannt machen. Die Auswahl kann dabei von der Empfangsstation so getroffen werden, dass eine für sie möglichst günstige, Aufwand und Leistung sparende Detektion und Entzerrung der von der Sendestation zu sendenden Daten ermöglicht wird.

Die erste Nachricht, die zweite Nachricht und die dritte Nachricht lassen sich jeweils mittels eines Nachrichtenelementes gemäß den entsprechenden unabhängigen Ansprüchen zwischen der Sendestation und der Empfangsstation versenden und lassen sich dadurch in vorteilhafter Weise besonders einfach in ein schon bestehendes Signalisierungsprotokoll integrieren.

### Zeichnung

Ausführungsbeispiele der Erfindung sind in der Zeichnung dargestellt und in der nachfolgenden Beschreibung näher erläutert. Es zeigen Figur 1 ein Blockschaltbild einer erfindungsgemäßen Sendestation und einer erfindungsgemäßen Empfangsstation, Figur 2 einen Ablaufplan für den Austausch von Signalisierungsinformationen gemäß einer ersten Ausführungsform, Figur 3 einen Ablaufplan für den Austausch von Signalisierungsinformationen gemäß einer zweiten Ausführungsform, Figur 4 einen Ablaufplan für den Austausch von Signalisierungsinformationen gemäß einer dritten Ausführungsform, Figur 5 einen Ablaufplan für den Austausch von Signalisierungsinformationen gemäß einer vierten Ausführungsform und Figur 6 eine Anordnung der erfindungsgemäßen Empfangsstation in einem zellularen Mobilfunknetz vor einer Übergabe von der Sendestation zu einer weiteren Sendestation.

### Beschreibung der Ausführungsbeispiele

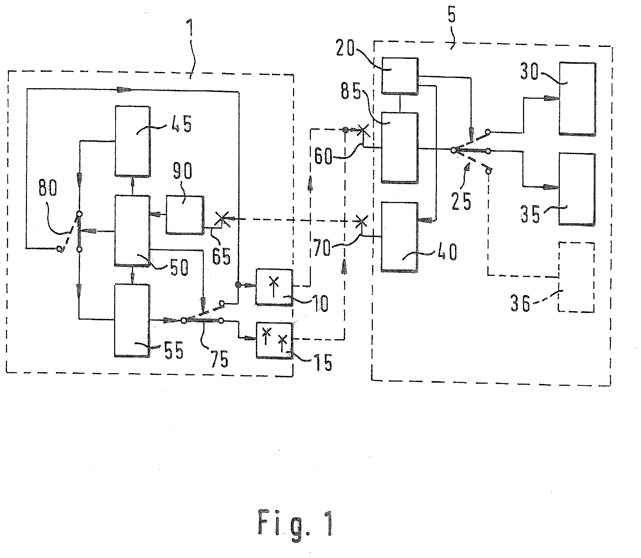

In Figur 1 kennzeichnet 1 eine Sendestation eines Telekommunikationsnetzes, die drahtlos oder drahtgebunden ausgebildet sein kann. Weiterhin kennzeichnet in Figur 1 das Bezugszeichen 5 eine Empfangsstation des Telekommunikationsnetzes, die ebenfalls drahtlos oder drahtgebunden ausgebildet sein kann. Zwischen der Sendestation 1 und der Empfangsstation 5 soll nun mindestens ein Übertragungskanal eingerichtet werden, der entsprechend der Ausbildung der Sendestation 1 und der Empfangsstation 5 ebenfalls drahtlos oder drahtgebunden sein kann. Über diesen mindestens einen Übertragungskanal sollen dann Daten von der Sendestation 1 zur Empfangsstation 5 übertragen werden, wobei der mindestens eine Übertragungskanal speziell dieser Datenübertragung von der Sendestation 1 zur Empfangsstation 5 gewidmet ist. Für die Übertragung von Daten der Sendestation 1 zu anderen, in Figur 1 nicht dargestellten Empfangsstationen kann jeweils mindestens ein eigener Übertragungskanal eingerichtet werden. Ein solcher, der Übertragung von Daten der Sendestation 1 zu einer speziellen Empfangsstation gewidmeter Übertragungskanal wird auch als "Dedicated Channel" oder "Gewidmeter Übertragungskanal" bezeichnet. Wenn im folgenden von einem Übertragungskanal die Rede ist, so ist darunter ein solcher "gewidmeter Übertragungskanal" zu verstehen. Zur Bildung eines solchen gewidmeten Kanals können eine oder mehrere physikalische Ressourcen herangezogen werden. Bei diesen physikalischen Ressourcen kann es sich um eine Frequenz, eine Zeitdauer, beispielsweise in Form eines Zeitschlitzes, einen Raumsektor, beispielsweise im Abstrahlbereich einer Antenne, einen Code oder dergleichen handeln. Versorgt die Sendestation 1 mehrere Empfangsstationen mit Daten, so können die einzelnen Übertragungskanäle von der Sendestation 1 gemultiplext werden, wobei die einzelnen Empfangsstationen auf den ihnen jeweils zugeordneten Übertragungskanal je nach den verwendeten physikalischen Ressourcen gemäß einem entsprechenden Kanalzugriffsverfahren zugreifen können, um die von der Sendestation 1 an sie gesendeten Daten zu empfangen. Je nach verwendeten physikalischen Ressourcen kann es sich bei dem Kanalzugriffsverfahren dann entsprechend um ein Frequenzvielfachzugriffs- oder FDMA-Verfahren (Frequency Division Multiple Access), ein Zeitvielfachzugriffs- oder TDMA-Verfahren (Time Division Multiple Access), ein Raumvielfachzugriffs- oder SDMA-Verfahren (Space Division Multiple Access), ein Codevielfachzugriffs- oder CDMA-Verfahren (Code Division Multiple Access), um beliebige Kombinationen aus den oben genannten Verfahren oder dergleichen handeln.

Im folgenden soll nun beispielhaft angenommen werden, dass die Sendestation 1 als Basisstation und die Empfangsstation 5 als Mobilstation eines Mobilfunknetzes ausgebildet sind. Der mindestens eine zwischen der Basisstation 1 und der Mobilstation 5 einzurichtende Übertragungskanal ist dann als Funkkanal ausgebildet. Das Mobilfunknetz, die Basisstation 1 und die Mobilstation 5 können beispielsweise nach dem GSM-Standard (Global System for Mobile Communications), nach dem UMTS-Standard (Universal Mobile Telecommunication System) oder dergleichen ausgebildet sein. Im folgenden soll beispielhaft angenommen werden, dass das Mobilfunknetz, die Basisstation 1 und die Mobilstation 5 nach dem UMTS-Standard ausgebildet sind. Dem Mobilfunknetz nach UMTS-Standard soll dabei ein CDMA-System im TDD-Betrieb (Time Division Duplex) zugrundeliegen. Dabei wird zwischen der Basisstation 1 und der Mobilstation 5 eine Halbduplexverbindung eingerichtet, die für die Übertragung von der Basisstation 1 zur Mobilstation 5 und von der Mobilstation 5 zur Basisstation 1 jeweils unterschiedliche Zeitschlitze vorsieht. Für die Übertragung von der Basisstation 1 zur Mobilstation 5 ist dabei mindestens ein Zeitschlitz vorgesehen. Die in diesem Zeitschlitz von der Basisstation 1 zur Mobilstation 5 übertragenen Daten sind dabei gemäß einem CDMA-Code codiert und auf eine Trägerfrequenz aufmoduliert. Der CDMA-Code, der Zeitschlitz und die Trägerfrequenz stellen dabei jeweils eine physikalische Ressource dar, deren Kombination den Übertragungskanal von der Basisstation 1 zur Mobilstation 5 bildet. Die Mobilstation 5 umfasst eine erste Empfangseinheit 85, die über erste Auswahlmittel 25 wahlweise mit ersten Detektionsmitteln 30 oder mit zweiten Detektionsmitteln 35 verbindbar ist. An die erste Empfangseinheit 85 sind erste Auswertemittel 20 angeschlossen. Die ersten Auswertemittel 20 steuern erste Nachrichtenerzeugungsmittel 40 und die ersten Auswahlmittel 25 der Mobilstation 5 an. An die erste Empfangseinheit 85 ist eine erste Empfangsantenne 60 und an die ersten Nachrichtenerzeugungsmittel 40 ist eine Sendeantenne 70 der Mobilstation 5 angeschlossen. Die erste Empfangsantenne 60 und die Sendeantenne 70 der Mobilstation 5 können auch beispielsweise über eine Antennenweiche miteinander kombiniert und zu einer gemeinsamen Sende-/Empfangsantenne zusammengefasst sein. Die Basisstation 1 umfasst zweite Auswertemittel 50, die zweite Nachrichtenerzeugungsmittel 45 und eine Aufbereitungseinheit 55 ansteuern. An die zweiten Auswertemittel 50 ist über eine zweite Empfangseinheit 90 eine zweite Empfangsantenne 65 angeschlossen. Die Aufbereitungseinheit 55 ist über zweite Auswahlmittel 75 wahlweise mit einer ersten Antenneneinheit 10 oder mit einer zweiten Antenneneinheit 15 verbindbar. Die zweiten Nachrichtenerzeugungsmittel 45 sind über dritte Auswahlmittel 80 wahlweise mit der ersten Antenneneinheit 10 oder mit der Aufbereitungseinheit 55 verbindbar. Die ersten Auswahlmittel 25, die zweiten Auswahlmittel 75 und die dritten Auswahlmittel 80 können jeweils gemäß Figur 1 als steuerbarer Schalter ausgebildet sein, wobei die ersten Auswahlmittel 25 von den ersten Auswertemitteln 20 und die zweiten Auswahlmittel 75 und die dritten Auswahlmittel 80 von den zweiten Auswertemitteln 50 angesteuert werden. Die erste Antenneneinheit 10 ist als einzelne Sendeantenne ausgebildet. Die zweite Antenneneinheit 15 umfasst mindestens zwei Sendeantennen und ermöglicht die Abstrahlung von Signalen in einem Sendediversitybetrieb. Auch bei der Basisstation 1 ist es möglich, Sende- und Empfangsantennen in der bezüglich der Mobilstation 5 beschriebenen Weise zu einer oder - bei Sendediversitybetrieb - mehreren Sende-/Empfangsantennen mittels Antennenweiche zu kombinieren.

Um den mindestens einen Übertragungskanal von der Basisstation 1 zur Mobilstation 5 einzurichten ist zuvor ein Austausch von Signalisierungsinformationen zwischen der Basisstation 1 und der Mobilstation 5 erforderlich, um die entsprechende Zuteilung der zur Bildung des Übertragungskanals notwendigen physikalischen Ressourcen zu veranlassen. Es soll nun vorgesehen sein, dass die über den einzurichtenden Übertragungskanal von der Basisstation 1 zur Mobilstation 5 zu sendenden Daten in der Basisstation 1 aufbereitet werden, um die Qualität des Empfangs dieser Daten bei der Mobilstation 5 zu erhöhen. Die Detektion der so empfangenen Daten erfordert dann in der Mobilstation 5 nur geringen oder gar keinen Aufwand mehr, so dass der Leistungsverbrauch in der Mobilstation 5 reduziert und die Stand-By-Zeit der Mobilstation 5 erhöht wird. Die Mobilstation 5 ist dabei in der Lage, zwischen zwei verschiedenen Detektionsmitteln 30, 35 umzuschalten, je nach dem, mit welcher Qualität die Daten von der Basisstation 1 empfangen werden. Dazu ist jedoch in der Mobilstation 5 eine Kenntnis darüber erforderlich, ob die zu sendenden Daten in der Basisstation 1 überhaupt aufbereitet wurden. Daher wird vor der Einrichtung des Übertragungskanals von der Basisstation 1 mit den Signalisierungsinformationen eine dritte Nachricht von der Basisstation 1 zur Mobilstation 5 übertragen, die eine Information darüber enthält, ob in der Sendestation 1 eine Aufbereitung der zu sendenden Daten durchgeführt wird. Die dritte Nachricht wird dabei von den zweiten Nachrichtenerzeugungsmitteln 45 erzeugt und über die dritten Auswahlmittel 80 und die erste Antenneneinheit 10 an die erste Empfangseinheit 85 abgestrahlt. Die ersten Auswertemittel 20 prüfen dann anhand der dritten Nachricht, ob eine Aufbereitung der zu sendenden Daten in der Basisstation 1 durchgeführt wird. Ist dies der Fall, so werden zur Detektion die ersten Detektionsmittel 30 ausgewählt, andernfalls werden die zweiten Detektionsmittel 35 zur Detektion ausgewählt. Optional kann es vorgesehen sein, dass die zu sendenden Daten in der Basisstation 1 in verschiedener Weise aufbereitet werden. Dann wird mit der dritten Nachricht auch eine Information darüber von der Basisstation 1 an die Empfangsstation 5 übertragen, nach welcher Art die zu sendenden Daten aufbereitet werden. Die Mobilstation 5 kann dazu, wie in Figur 1 gestrichelt dargestellt ist, dritte Detektionsmittel 36 umfassen, die über die ersten Auswahlmittel 25 ebenfalls mit der ersten Empfangseinheit 85 verbindbar sind. Die ersten Auswertemittel 20 prüfen dann anhand der dritten Nachricht zunächst, ob die zu sendenden Daten in der Basisstation 1 aufbereitet wurden. Ist dies nicht der Fall, so veranlassen die ersten Auswertemittel 20 die ersten Auswahlmittel 25 zur Verbindung der ersten Empfangseinheit 85 mit den zweiten Detektionsmitteln 35. Andernfalls prüfen die ersten Auswertemittel 20 anhand der dritten Nachricht, nach welcher Art die zu sendenden Daten in der Basisstation 1 aufbereitet werden. Je nach Art der Aufbereitung können dann die ersten Auswertemittel 20 die ersten Auswahlmittel 25 zur Verbindung der ersten Detektionsmittel 30 oder der dritten Detektionsmittel 36 mit der ersten Empfangseinheit 85 veranlassen. Die von der Basisstation 1 zu sendenden Daten werden dann von den mit der ersten Empfangseinheit 85 verbundenen Detektionsmitteln detektiert.

Es kann vorgesehen sein, dass die von der Basisstation 1 zur Mobilstation 5 zu sendenden Daten in einem einzigen gewidmeten Übertragungskanal übertragen werden. Es kann jedoch auch vorgesehen sein, dass für die Übertragung mehrere gewidmete Übertragungskanäle eingerichtet werden. Die dritte Nachricht wird dann von der Basisstation 1 für jeden einzurichtenden Übertragungskanal einzeln an die ersten Auswertemittel 20 über die erste Empfangseinheit 85 abgesetzt. Dies ist besonders dann unabdingbar, wenn die in den verschiedenen Übertragungskanälen zu sendenden Daten nach verschiedenen Arten in der Basisstation 1 aufbereitet werden oder wenn in einem Übertragungskanal Daten ohne Aufbereitung und in einem anderen Übertragungskanal Daten mit Aufbereitung gesendet werden sollen. Wenn jedoch in mehreren Übertragungskanälen Daten ohne Aufbereitung von der Basisstation 1 zur Mobilstation 5 übertragen werden sollen oder wenn in verschiedenen Übertragungskanälen Daten übertragen werden sollen, die nach der gleichen Art aufbereitet werden, so kann es auch vorgesehen sein, eine einzige dritte Nachricht bezüglich mehrerer Übertragungskanäle von der Basisstation 1 zur Mobilstation 5 zu übertragen, wenn die Art der Aufbereitung in diesen Übertragungskanälen gleich ist oder wenn keine Aufbereitung in diesen Übertragungskanälen stattfindet.

Die Aufbereitung der zu sendenden Daten in der Basisstation 1 kann auf verschiedene Arten erfolgen. Zum einen können die von der Basisstation 1 zu versendenden Daten von der ersten Antenneneinheit 10 mit einer Sendeantenne oder von der zweiten Antenneneinheit 15 mit mehreren Sendeantennen mittels eines Sendediversityverfahrens abgestrahlt werden.
Die Verwendung der ersten Antenneneinheit 10 mit einer Sendeantenne stellt dabei den herkömmlichen Fall ohne Aufbereitung der zu versendenden Daten dar. Bei Verwendung der zweiten Antenneneinheit 15 mit mehreren Sendeantennen wird in der Mobilstation 5 ein Mehrwegeempfang erzeugt, durch den Signaleinbrüche oder Fading auf einem oder mehreren der Empfangswege durch einen Empfangsweg ohne Fading kompensiert werden kann. Mit der dritten Nachricht kann somit eine Information darüber übertragen werden, ob die von der Basisstation 1 zu versendenden Daten von der ersten Antenneneinheit 10 oder von der zweiten Antenneneinheit 15 abgestrahlt werden. Werden die zu versendenden Daten dabei von der ersten Antenneneinheit 10 abgestrahlt, so veranlassen die ersten Auswertemittel 20 die Anschaltung der zweiten Detektionsmittel 35 über die ersten Auswahlmittel 25 an die erste Empfangseinheit 85. Andernfalls werden die dritten Detektionsmittel 36 an die erste Empfangseinheit 85 über die ersten Auswahlmittel 25 angeschaltet. Die zweiten Detektionsmittel 35 führen dabei eine Entzerrung und Detektion der empfangenen Daten in herkömmlicher Weise, beispielsweise nach einem Joint Detection Verfahren (JD), durch. Ein solches Verfahren ist aus der Veröffentlichung "System Description Performance Evaluation", Concept Group Delta WB-TDMA/CDMA, ETSI, SMG2 bekannt. Dabei handelt es sich um eine kombinierte Rückgängigmachung von sogenannter Mehrfachnutzerinterferenz und Intersymbolinterferenz. Mehrfachnutzerinterferenz entsteht dabei durch gegenseitige Beeinflussung von Codes, die unterschiedlichen Mobilstationen zugeordnet sind, bei der Übertragung über gemultiplexte Übertragungskanäle. Intersymbolinterferenz entsteht durch Mehrwegeausbreitung der Signale im Funkkanal.

Die dritten Detektionsmittel 36 können ebenfalls nach einem JD-Verfahren arbeiten, angepasst an die verwendete zweite Antenneneinheit 15 bezüglich der für die Entzerrung erforderlichen Schätzung der Impulsantwort der dabei verwendeten Übertragungskanäle.

Die Aufbereitung der von der Basisstation 1 zu sendenden Daten kann auch dadurch erfolgen, dass in der Aufbereitungseinheit 55 eine Vorverzerrung der zu sendenden Daten erfolgt. Die Vorverzerrung wird dann durch die Eigenschaften des einzurichtenden Übertragungskanals im Vergleich zu den zweiten Detektionsmitteln 35 kompensiert, so dass die von der Basisstation 1 zu sendenden Daten an der ersten Empfangseinheit 85 unverzerrt ankommen und somit in der Mobilstation 5 nicht mehr entzerrt werden müssen. Die empfangenen Daten können dann durch die ersten Detektionsmittel 30 beispielsweise lediglich durch Korrelationsempfang detektiert werden, wozu die ersten Detektionsmittel 30 an die erste Empfangseinheit 85 über die ersten Auswahlmittel 25 anzuschalten sind.

Die ersten Detektionsmittel 30 können also lediglich als Korrelationsempfänger ausgebildet sein, beispielsweise nach einem sogenannten"Matched Filter"-Konzept, wie es aus der Veröffentlichung "Signalübertragung", Lüke, Springer-Verlag, 5. Auflage, 1991 bekannt ist, da sie entsprechend aufbereitete Daten von der Basisstation 1 detektieren, die unverzerrt und daher mit hoher Empfangsqualtität an der Mobilstation 5 eintreffen.

Werden hingegen die Daten von der Basisstation 1 ohne Vorverzerrung und über die erste Antenneneinheit 10 zur Mobilstation 5 versendet, so erreichen sie die erste Empfangseinheit 85 verzerrt und müssen den zweiten Detektionsmitteln 35 zur Entzerrung mit erhöhtem Aufwand zugeführt werden. Dies ist erheblich aufwendiger und leistungsverbrauchender als beispielsweise ein reiner Korrelationsempfang mit den ersten Detektionsmitteln 30.
Entweder entfällt in diesem Fall die dritte Nachricht oder die dritte Nachricht enthält in diesem Fall eine Information darüber, dass keine Aufbereitung in der Basisstation stattfindet.

Eine noch höhere Empfangsqualität lässt sich erzielen, wenn die Vorverzerrung mit der Abstrahlung über die zweite Antenneneinheit 15 verknüpft wird, so dass die zu sendenden Signale nicht nur unverzerrt, sondern auch ohne Signaleinbrüche oder Fading an der ersten Empfangseinheit 85 ankommen. Auch in diesem Fall können lediglich die ersten Detektionsmittel 30 beispielsweise mit einem reinen Korrelationsempfang an die erste Empfangseinheit 85 über die ersten Auswahlmittel 25 angeschlossen werden. Mit der dritten Nachricht wird dann eine Information darüber übertragen, dass die von der Basisstation 1 zu versendenden Daten von der zweiten Antenneneinheit 15 abgestrahlt werden und dass in der Basisstation 1 eine Vorverzerrung der zu sendenden Daten durchgeführt wird.

Die Steuerung der ersten Auswahlmittel 25 zur Verbindung der entsprechenden Detektionsmittel mit der ersten Empfangseinheit 85 erfolgt durch die ersten Auswertemittel 20 nach Auswertung der entsprechenden dritten Nachricht.

Bei dem hier beschriebenen CDMA-System im TDD-Betrieb empfiehlt sich für die Durchführung einer Vorverzerrung das aus der genannten Veröffentlichung "Summary of Joint Predistortion" bekannte Joint Predistortion Verfahren (JP). Entsprechend wird mit der dritten Nachricht eine Information darüber von der Basisstation 1 an die Mobilstation 5 übertragen, ob eine Vorverzerrung nach dem JP-Verfahren für die zu sendenden Daten durchgeführt wird. Bei dem JP-Verfahren schätzt die Basisstation 1 mittels den für die Übertragung von der Mobilstation 5 zur Basisstation 1 verwendeten Zeitschlitzen die Impulsantwort des Übertragungskanals von der Mobilstation 5 zur Basisstation 1. Diese Schätzung kann auch für den einzurichtenden Übertragungskanal von der Basisstation 1 zur Mobilstation 5 verwendet werden, da im TDD-Betrieb die Übertragungseigenschaften der beiden Übertragungskanäle in Hin- und Rückrichtung im wesentlichen gleich sind und keine Frequenzunterschiede auftreten. Die zu sendenden Daten werden dann vor ihrer Übertragung an die Mobilstation 5 mit der inversen geschätzten Impulsantwort gefaltet und somit vorverzerrt.

Es kann weiterhin vorgesehen sein, dass mit den Signalisierungsinformationen vor der dritten Nachricht eine zweite Nachricht von der Mobilstation 5 zur Basisstation 1 übertragen wird, die eine Information darüber enthält, welche Art oder welche Arten von Aufbereitung der von der Basisstation 1 zu sendenden Daten von der Mobilstation 5 zur Detektion dieser Daten unterstützt wird bzw. unterstützt werden. Die zweite Nachricht wird dabei von den ersten Nachrichtenerzeugungsmitteln 40 erzeugt und von der Sendeantenne 70 der Mobilstation 5 an die Basisstation 1 abgestrahlt. Dort wird sie von der zweiten Empfangseinheit 90 über die zweite Empfangsantenne 65 empfangen und den zweiten Auswertemitteln 50 übermittelt. Die von der Mobilstation 5 unterstützten Arten der Aufbereitung hängen von den in der Mobilstation 5 über die ersten Auswahlmittel 25 an die erste Empfangseinheit 85 anschaltbaren Detektionsmitteln 30, 35, 36 ab. So kann im vorliegenden Beispiel die zweite Nachricht die Information enthalten, dass in der Mobilstation 5 eine Detektion durch reinen Korrelationsempfang und eine Detektion mit vorheriger Entzerrung nach einem Joint Detection Verfahren in zwei verschiedenen Stufen hinsichtlich des Aufwandes für Fehlererkennung und/oder -korrektur möglich ist. Die zweiten Auswertemittel 50 werten die zweite Nachricht dann dahingehend aus, welche Art oder welche Arten der Aufbereitung von zu sendenden Signalen die Mobilstation 5 unterstützt. Die zweiten Auswertemittel 50 prüfen dann, ob diese Art oder diese Arten der Aufbereitung auch von der Basisstation 1 unterstützt wird bzw. unterstützt werden. Im vorliegenden Beispiel stellen die zweiten Auswertemittel 50 fest, dass die von der Mobilstation 5 angebotene Detektion durch reinen Korrelationsempfang beispielsweise mit der Aufbereitung durch Vorverzerrung oder durch Vorverzerrung und Sendediversitybetrieb zusammenpasst. Weiterhin stellen die zweiten Auswertemittel 50 anhand der zweiten Nachricht fest, dass die zu sendenden Daten auch nicht oder durch Sendediversitybetrieb teilweise aufbereitet an die Mobilstation 5 gesendet werden können, da mit dem Joint Detection-Verfahren die auf dem einzurichtenden Übertragungskanal verzerrten und durch Fading mehr oder weniger beeinflussten Signale entsprechend entzerrt und detektiert werden können. Die zweiten Auswertemittel 50 stellen in diesem Beispiel also fest, dass die von der Mobilstation 5 unterstützten Arten der Aufbereitung auch von der Basisstation 1 unterstützt werden. Die zweiten Auswertemittel 50 wählen dann mindestens eine Art der Aufbereitung aus, die sowohl von der Basisstation 1 als auch von der Mobilstation 5 unterstützt wird und steuert die zweiten Nachrichtenerzeugungsmittel 45 derart an, die mindestens eine ausgewählte Art der Aufbereitung in der dritten Nachricht anzugeben. Weiterhin steuern die zweiten Auswertemittel 50 die Aufbereitungseinheit 55 und die zweiten Auswahlmittel 75 so an, dass sie die zu sendenden Daten gemäß der mindestens einen ausgewählten Art aufbereitet. Wenn also beispielsweise die zweiten Auswertemittel 50 anhand der zweiten Nachricht feststellen, dass die Mobilstation 5 eine Detektion mit reinem Korrelationsempfang unterstützt, so veranlasst sie die Aufbereitungseinheit 55 zur Vorverzerrung der zu sendenden Signale und die zweiten Auswahlmittel 75 zur Verbindung der zweiten Antenneneinheit 15 oder der ersten Antenneneinheit 10 mit der Aufbereitungseinheit 55. Weiterhin veranlassen dann die zweiten Auswertemittel 50 die zweiten Nachrichtenerzeugungsmittel 45 zur Erzeugung einer dritten Nachricht mit Informationen darüber, dass die zu sendenden Daten vorverzerrt sind und über eine oder mehrere Antennen abgestrahlt werden. Wird für die Vorverzerrung das JP-Verfahren verwendet, so kann dies ebenfalls in der dritten Nachricht angegeben werden.

Diese Wahl der Aufbereitung der zu sendenden Daten führt in der Mobilstation 5 zu einem minimalen Aufwand für die Detektion der dort empfangenen Daten und zu einem minimalen Leistungsverbrauch.

Es kann weiterhin vorgesehen sein, dass mit den Signalisierungsinformationen vor der dritten Nachricht eine erste Nachricht von der Basisstation 1 zur Mobilstation 5 übertragen wird, die eine Information darüber enthält, welche Art oder welche Arten von Aufbereitung der zu sendenden Daten von der Basisstation 1 unterstützt wird bzw. unterstützt werden. Dazu erzeugen die zweiten Nachrichtenerzeugungsmittel 45 vor Absetzen der dritten Nachricht die erste Nachricht und setzen sie an die Mobilstation 5 ab. Im beschriebenen Beispiel enthält die erste Nachricht Informationen darüber, dass die zu sendenden Daten ohne Vorverzerrung und mit nur einer Sendeantenne an die Mobilstation 5 abgestrahlt werden können. Weiterhin umfasst die erste Nachricht Informationen darüber, dass zu sendende Daten von der Basisstation 1 mit Vorverzerrung und nur von einer einzigen Sendeantenne abgestrahlt werden können. Weiterhin umfasst die erste Nachricht Informationen darüber, dass die zu sendenden Daten von der Basisstation 1 mit Vorverzerrung und mit mehreren Antennen abstrahlbar sind. Weiterhin umfasst die erste Nachricht Informationen darüber, dass die zu sendenden Daten ohne Vorverzerrung aber von mehreren Antennen abstrahlbar sind. Somit sind vier verschiedene Arten der Aufbereitung in der Basisstation 1 möglich und als Informationen in der ersten Nachricht enthalten. Dabei wird die Nichtaufbereitung von Daten ohne Vorverzerrung und bei Verwendung nur einer Sendeantenne auch als Aufbereitungsart mitgezählt. Die so erzeugte erste Nachricht wird in der ersten Empfangseinheit 85 der Mobilstation 5 empfangen und zur Auswertung an die ersten Auswertemittel 20 weitergeleitet. Die ersten Auswertemittel 20 werten dann die erste Nachricht dahingehend aus, welche Art oder welche Arten der Aufbereitung von zu sendenden Signalen die Basisstation 1 unterstützt. Die ersten Auswertemittel 20 prüfen dann, ob diese Art oder diese Arten der Aufbereitung auch von der Mobilstation 5 unterstützt wird bzw. unterstützt werden. Im vorliegenden Beispiel stellen die ersten Auswertemittel 20 fest, dass die Aufbereitung durch Vorverzerrung mit oder ohne Sendediversitybetrieb von der Mobilstation 5 durch die ersten Detektionsmittel 30 mit reinem Korrelationsempfang unterstützt wird. Weiterhin stellen die ersten Auswertemittel 20 fest, dass die Nichtaufbereitung ohne Vorverzerrung und mit nur einer Sendeantenne durch die zweiten Detektionsmittel 35 mittels des Joint-Detection-Verfahrens unterstützt werden. Weiterhin stellen die ersten Auswertemittel 20 fest, dass die Aufbereitung ohne Vorverzerrung und mit Sendediversitybetrieb durch die dritten Detektionsmittel 36 mittels des Joint Detection Verfahrens unterstützt wird.

Die ersten Auswertemittel 20 steuern dann die ersten Nachrichtenerzeugungsmittel 40 derart an, dass mindestens eine Art der Aufbereitung in der zweiten Nachricht angegeben wird, die sowohl von der Basisstation 1 als auch von der Mobilstation 5 unterstützt wird. Die ersten Auswertemittel 20 können dabei in diesem Beispiel die ersten Nachrichtenerzeugungsmittel 40 derart ansteuern, dass in die zweite Nachricht Informationen darüber aufgenommen werden, dass eine Detektion mit reinem Korrelationsempfang möglich ist. Es können natürlich in der zweiten Nachricht auch Angaben darüber aufgenommen werden, dass eine Detektion mit vorheriger Entzerrung nach dem Joint-Detection-Verfahren möglich ist. Werden jedoch die letztgenannten Informationen über die mögliche Entzerrung nach dem Joint Detection Verfahren nicht in die zweite Nachricht aufgenommen, so wird sichergestellt, dass die Basisstation 1 eine Aufbereitung der zu sendenden Daten vorsieht, die eine Detektion mit reinem Korrelationsempfang in der Mobilstation 5 ermöglichen und somit den Leistungsverbrauch in der Mobilstation 5 minimieren.

Es kann optional weiterhin vorgesehen sein, dass als zu sendende Daten die Signalisierungsinformationen selbst von der Basisstation 1 zur Mobilstation 5 aufbereitet übertragen werden. Dies kann jedoch frühestens dann geschehen, wenn anhand der zweiten Nachricht die von der Mobilstation 5 unterstützte Art bzw. die von der Mobilstation 5 unterstützten Arten der Aufbereitung bei der Basisstation 1 bekannt sind, wobei die Aufbereitung in mindestens einer von der Mobilstation 5 unterstützten Art erfolgt. Vor Übertragung von aufbereiteten Signalisierungsinformationen zur Mobilstation 5 setzt die Basisstation 1 außerdem eine entsprechende dritte Nachricht an die Mobilstation 5 ab, um die Mobilstation 5 über die verwendete Art der Aufbereitung rechtzeitig zu informieren, damit die Mobilstation 5 vor Übertragen der aufbereiteten Signalisierungsinformationen die ersten Auswahlmittel 25 entsprechend einstellen kann, um die erforderlichen Detektionsmittel mit der ersten Empfangseinheit 85 zu verbinden. Auf diese Weise kann auch bereits bei der Übertragung von Signalisierungsinformationen zur Mobilstation 5 Leistungsverbrauch an der Mobilstation 5 eingespart werden, vor allem dann, wenn die Signalisierungsinformationen so aufbereitet werden, dass die ersten Detektionsmittel 30 mit dem reinen Korrelationsempfang zur Detektion der empfangenen Signalisierungsinformationen verwendet werden können. Im beschriebenen Beispiel könnten die Signalisierungsinformationen in der Basisstation 1 beispielsweise derart aufbereitet werden, dass sie vorverzerrt und über eine oder mehrere Sendeantennen abgestrahlt werden. Die Detektion in der Mobilstation 5 erfolgt dann durch Anschaltung der ersten Detektionsmittel 30 über die ersten Auswahlmittel 25 an die erste Empfangseinheit 85, so dass ein reiner Korrelationsempfang möglich ist.

Von dem Zeitpunkt an, von dem die Signalisierungsinformationen aufbereitet von der Basisstation 1 zur Mobilstation 5 übertragen werden, veranlassen die zweiten Auswertemittel 50 die dritten Auswahlmittel 80 dazu, die Verbindung der zweiten Nachrichtenerzeugungsmittel 45 mit der ersten Antenneneinheit 10 zu unterbrechen und die zweiten Nachrichtenerzeugungsmittel 45 mit der Aufbereitungseinheit 55 zu verbinden. Die Aufbereitung erfolgt dann wie bereits allgemein für die zu sendenden Daten beschrieben. Alle anschließend für die Signalisierungsinformationen von den zweiten Nachrichtenerzeugungsmitteln 45 erzeugten Nachrichten werden dann entsprechend der gewählten Aufbereitungsart oder der gewählten Aufbereitungsarten aufbereitet an die Mobilstation 5 gesendet.

Für den Fall, daß die zu sendenden Daten in der Aufbereitungseinheit 55 nicht vorverzerrt werden, sondern lediglich durch Abstrahlung über mehrere Antennen aufbereitet werden, kann es auch vorgesehen sein, die zu sendenden Daten lediglich transparent durch die Aufbereitungseinheit 55 durchzuleiten.

Die aufbereiteten zu sendenden Daten können in einem Übertragungskanal übertragen werden, der nur der Verbindung zwischen der Basisstation 1 und der Mobilstation 5 gewidmet ist. Dies ist im Fall einer in der Aufbereitungseinheit 55 durchgeführten Vorverzerrung nach dem Joint Predistortion Verfahren sogar unerlässlich, da diese Vorverzerrung nur für den gewidmeten Hin- bzw. Rückkanal zwischen der Basisstation 1 und der Mobilstation 5 charakteristisch ist, nicht jedoch für Kanäle, die von mehreren Mobilstationen gemeinsam genutzt werden. Auch entsprechend aufbereitete Signalisierungsinformationen können in dem Übertragungskanal übertragen werden, der nur der Verbindung zwischen der Basisstation 1 und der Mobilstation 5 gewidmet ist. Dies geht jedoch frühestens nach Aussenden der dritten Nachricht von der Basisstation 1 zur Mobilstation 5, da erst anschliessend dieser Übertragungskanal eingerichtet wird.
Zuvor werden die Signalisierungsinformationen in einem mehreren Mobilstationen zugänglichen Kanal übertragen. Dies gilt dann auch für die Übertragung der ersten Nachricht, die vor der dritten Nachricht übertragen wird.

Die erste Nachricht, die zweite Nachricht und die dritte Nachricht werden jeweils in Form eines Nachrichtenelementes als Teil der Signalisierungsinformationen übertragen. Ein solches Nachrichtenelement lässt sich besonders einfach in die bestehenden Protokolle zum Austausch der Signalisierungsinformationen einfügen.

Die von der Basisstation 1 zur Mobilstation 5 zu sendenden Signalisierungsinformationen werden durch die zweiten Nachrichtenerzeugungsmittel 45 erzeugt und von der ersten Antenneneinheit 10 über einen von mehreren Mobilstationen gemeinsam genutzten Kanal an die Mobilstation 5 abgestrahlt, solange der einzurichtende gewidmete Übertragungskanal zwischen der Basisstation 1 und der Mobilstation 5 noch nicht besteht. Besteht dieser Übertragungskanal, so werden die weiteren Signalisierungsinformationen von dem zweiten Nachrichtenerzeugungsmittel 45 über die Aufbereitungseinheit 55 und entweder die erste Antenneneinheit 10 oder die zweite Antenneneinheit 15 an die Mobilstation 5 versendet. Zur Erzeugung der für die Signalisierungsinformationen erforderlichen Nachrichten werden die zweiten Nachrichtenerzeugungsmittel 45 von den zweiten Auswertemitteln 50 angesteuert, die eine Funkressourcensteuerung RRC (Radio Ressource Control) umfasst. Über die RRC entscheidet der Betreiber des Mobilfunknetzes über die Zuweisung der entsprechenden physikalischen Ressourcen zur Einrichtung des gewidmeten Übertragungskanals von der Basisstation 1 zur Mobilstation 5. In der RRC werden somit die physikalischen Ressourcen des einzurichtenden Übertragungskanals verwaltet. Ob und wann die Basisstation 1 nun beispielsweise eine Joint Predistortion Vorverzerrung in einem Zeitschlitzübertragungskanal betreibt, entscheidet somit der Betreiber des Mobilfunknetzes über die RRC. Welche physikalischen Ressourcen auf welche Weise von der RRC an welche Mobilstation zugewiesen werden, wird von der RRC mittels der in den zweiten Nachrichtenerzeugungsmitteln 45 zu bildenden Signalisierungsinformationen an die betroffenen Mobilstationen übermittelt. Die für diese Signalisierungsinformationen zu bildenden Nachrichten und die zugehörigen Nachrichtenelemente sind aus der genannten Druckschrift "RRC Protocol Specification" bekannt.

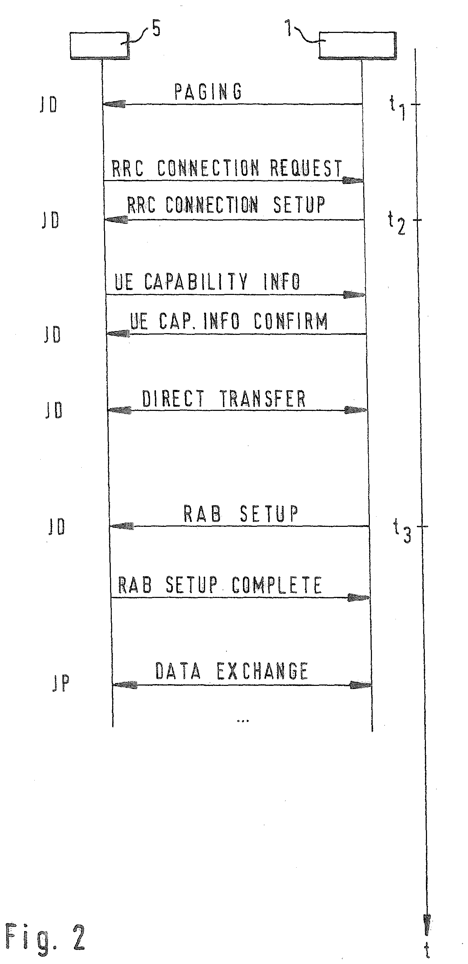

In Figur 2 ist ein mögliches Signalisierungsszenario über einer Zeitachse aufgetragen, die die zwischen der Basisstation 1 und der Mobilstation 5 auszutauschenden Signalisierungsinformationen in Abhängigkeit der Zeit darstellt.

Die Erzeugung von der Mobilstation 5 zur Basisstation 1 zu sendenden Signalisierungsinformationen kann dabei durch die ersten Nachrichtenerzeugungsmittel 40 gesteuert durch die ersten Auswertemittel 20 erfolgen. Die Auswertung der Signalisierungsinformationen der Mobilstation 5 erfolgt durch die zweiten Auswertemittel 50 in der Basisstation 1 und die Auswertung der Signalisierungsinformationen von der Basisstation 1 erfolgt durch die ersten Auswertemittel 20 in der Mobilstation 5.

Das Signalisierungsszenario gemäß Figur 2 ist für einen ankommenden Telefonanruf an der Mobilstation 5 in einem sogenannten "Idle Mode" beschrieben, in dem weder eine Datenübertragung zwischen der Mobilstation 5 und der Basisstation 1 existiert, noch der genaue Aufenthaltsort der Mobilstation 5 dem Mobilfunknetz bekannt ist. In diesem "Idle Mode" kann die Mobilstation 5 nur grob im Mobilfunknetz lokalisiert werden. Dabei sind mehrere jeweils von einer Basisstation aufgespannte Funkzellen zu jeweils einem Lokalisierungsbereich zusammengefasst, wobei der Aufenthalt der Mobilstation 5 in einem solchen Lokalisierungsbereich bekannt ist. Verlässt die Mobilstation 5 einen Lokalisierungsbereich, um in einen anderen Lokalisierungsbereich einzutreten, so teilt sie dies dem Netzbetreiber mit. Wenn nun die Mobilstation 5, die beispielsweise als Mobiltelefon ausgebildet sein kann, angerufen wird und sich im "Idle Mode" befindet, so sendet die Basisstation ì zunächst eine "Paging"-Nachricht zur Mobilstation 5 über einen Pagingkanal PCH, da die Mobilstation 5 aufgrund ihrer nur groben Lokalisierung im "Idle Mode" am einfachsten auf diese Weise erreichbar ist. Eine Verbindung von der Basisstation 1 zur Mobilstation 5 wird im folgenden als Downlink und eine Verbindung von der Mobilstation 5 zur Basisstation 1 als Uplink bezeichnet. Der Pagingkanal stellt somit eine Downlink-Verbindung dar. Über diesen Pagingkanal wird der Mobilstation 5 der eingehende Ruf signalisiert. Die "Paging"-Nachricht geht zu einem ersten Zeitpunkt t₁ an der Mobilstation 5 ein. Im "Idle Mode" geht die Mobilstation 5 davon aus, dass die ihr zugesandten Signalisierungsinformationen nicht aufbereitet sind, so dass die ersten Auswertemittel 20 die ersten Auswahlmittel 25 so ansteuern, dass die zweiten Detektionsmittel 35 mit der ersten Empfangseinheit 85 verbunden sind und eine Joint-Detection-Entzerrung und Detektion in der Mobilstation 5 stattfindet. Dies ist in Figur 2 auf der Seite der Mobilstation 5 durch die Buchstabenkombination JD zum ersten Zeitpunkt t₁ verdeutlicht. Auf die "Paging"-Nachricht reagiert die Mobilstation 5, indem sie über einen physikalischen RACH-Kanal (Random Access Channel), der einen allen Mobilstationen zugänglichen Uplinkkanal darstellt, eine sogenannte "RRC Connection Request"-Nachricht zur Basisstation 1 sendet. Mit dieser Meldung fordert die Mobilstation 5 den Netzbetreiber über die Basisstation 1 zum Einrichten einer Telekommunikationsverbindung zum rufenden Teilnehmer auf. Die RRC der Basisstation 1 und damit der Netzbetreiber des Mobilfunknetzes nimmt diese "RRC Connection Request"-Nachricht entgegen und veranlasst die zweiten Nachrichtenerzeugungsmittel 45 dazu, der Mobilstation 5 auf diese "RRC Connection Request"-Nachricht mit einer "RRC Connection Setup"-Nachricht zu antworten.

Über die "RRC Connection Request"-Nachricht hat sich die Mobilstation 5 im Mobilfunknetz bekannt gemacht und kann auf diese Weise in einer Funkzelle des Mobilfunknetzes lokalisiert werden. Im hier beschriebenen Beispiel soll dies die Funkzelle der Basisstation 1 sein. Mehrere der in der Funkzelle der Basisstation 1 befindliche Mobilstationen werden über einen gemeinsamen FACH (Forward Access Channel) mit Signalisierungsinformationen versorgt. Der FACH ist ein gemeinsamer Downlinkkanal für mehrere Mobilstationen in der Funkzelle der Basisstation 1. Die "RRC Connection Setup" Nachricht wird von der Basisstation 1 über den FACH an die Mobilstation 5 übertragen. Über die "RRC Connection Setup" Nachricht erhält die Mobilstation 5 Informationen über das Mobilfunknetz. Die "RRC Connection Setup"-Nachricht wird in der Mobilstation 5 zu einem zweiten Zeitpunkt t₂ empfangen und ebenfalls noch durch die zweiten Detektionsmittel 35 nach dem Joint-Detection-Verfahren entzerrt und detektiert.

Der Zeitraum zwischen dem ersten Zeitpunkt t₁ und dem zweiten Zeitpunkt t₂ dient zum Aufbau einer Signalisierungsverbindung zwischen der Basisstation 1 und der Mobilstation 5, die im Downlink durch den FACH und im Uplink durch den RACH gebildet wird. Dabei ist der RACH ein Kanal, der allen Mobilstationen in der Funkzelle der Basisstation 1 zugänglich ist. Die Signalisierungsverbindung ist somit vom zweiten Zeitpunkt t₂ an vollständig installiert und wird nun für die weitere Signalisierung verwendet.

Da wie beschrieben eine Joint Predistortion Vorverzerrung nur für Übertragungskanäle geeignet ist, die speziell für die Übertragung von Informationen zwischen der Basisstation 1 und der Mobilstation 5 eingerichtet sind, nicht jedoch für Kanäle, die allen Mobilstationen in der Funkzelle der Basisstation 1 zugänglich sind, lässt sich das Joint Predistortion Verfahren nicht für den Austausch von Signalisierungsinformationen über den FACH verwenden. Daher ist bei Verwendung des FACH für die Übertragung von Signalisierungsinformationen von der Basisstation 1 zur Mobilstation 5 noch eine herkömmliche Entzerrungs-und Detektionsmethode, beispielsweise gemäß dem Joint Detection Verfahren, in der Mobilstation 5 erforderlich. Gemäß dem hier beschriebenen Beispiel wird vorausgesetzt, dass die Mobilstation 5 den Empfang von nach dem Joint Predistortion Verfahren vorverzerrten Signalen unterstützt, indem sie die ersten Detektionsmittel 30 mit der ersten Empfangseinheit 85 verbindet und somit ein reiner Korrelationsempfang zur Verfügung stellt. Das bedeutet, dass die Mobilstation 5 JP vorverzerrte Signale empfangen kann. Um dem Mobilfunknetz diese Fähigkeit mitzuteilen, sendet die Mobilstation 5 nach erhaltener "RRC Connection Setup"-Nachricht eine "UE Capability Info"-Nachricht an die Basisstation 1. UE steht dabei für "User Equipment" und damit für die Mobilstation 5. Der Aufbau der "UE Capability Information"-Nachricht ist aus der genannten Veröffentlichung "RRC Protocol Specification" bekannt. Die versendete "UE Capability Info"-Nachricht beinhaltet unter anderem ein Nachrichtenelement mit dem Namen "UE Mode Capability". In diesem Nachrichtenelement werden unter anderem Informationen darüber mitgeteilt, ob die Mobilstation 5 TDD und/oder FDD (Frequency Division Duplex) unterstützt. Das Nachrichtenelement "UE Mode Capability" ist dabei ebenfalls aus der genannten Veröffentlichung "RRC Protocol Specification" bekannt. Es ist in Tabelle 1 nachfolgend dargestellt.

**Tabelle 1**

| Parameter | Referenz | Typ | Bemerkung |
|---|---|---|---|
| Systemfähigkeit (UMTS/GSM/andere) | | | |
| UMTS-Fähigkeit (TDD/FDD) | | | |
| Chipratenfähigkeit | | | |
| Funkfrequenz-Fähigkeit | | | |
| Variable Duplex-Distanzfähigkeit | | | |

In dieses Nachrichtenelement "UE Mode Capability" soll eine zusätzliche Information eingefügt werden, welche der Basisstation 1 signalisiert, ob die Mobilstation 5, die die "UE Capability Info"-Nachricht an die Basisstation 1 versendet, eine Joint Predistortion Vorverzerrung unterstützt. Gemäß Tabelle 2 wird das auf diese Weise ergänzte neue Nachrichtenelement "UE Mode Capability" dargestellt.

**Tabelle 2**

| Parameter | Referenz | Typ | Bemerkung |
|---|---|---|---|
| Systemfähigkeit | | | |
| (UMTS/GSM/andere) | | | |
| UMTS-Fähigkeit (TDD/FDD) | | | |
| TDD-Modus (JD/JP) | | | Nur TDD-Modus |
| Chipratenfähigkeit | | | |
| Funkfrequenz-Fähigkeit | | | |
| Variable Duplex-Distanzfähigkeit | | | |

Die ergänzende Parameterinformation "TDD-Modus (JD/JP)" beschreibt in diesem Beispiel, dass im TDD-Betrieb die Mobilstation 5 eine Detektion von nach dem JP-Verfahren vorverzerrten Signalen unterstützt. Die Bemerkung nur TDD Modus" bedeutet, dass die Unterstützung dieser Detektion nur bei TDD-Betrieb möglich ist. Das JP-Verfahren ist beispielsweise nicht im FDD-Betrieb anwendbar, da aus dem Rückkanal von der Mobilstation 5 zur Basisstation 1 nicht die Impulsantwort für den Hinkanal von der Basisstation 1 zur Mobilstation 5 geschätzt werden kann aufgrund der unterschiedlichen Frequenzlagen im Hin- und Rückkanal bei FDD-Betrieb.

Das Mobilfunknetz weiß nun anhand des neuen Nachrichtenelementes "UE Mode Capability" dass die Mobilstation 5 von der Basisstation 1 JP vorverzerrte Signale empfangen kann. Die RRC veranlasst daraufhin die zweiten Nachrichtenerzeugungsmittel 45 dazu, der Mobilstation 5 eine Empfangsbestätigung der "UE Capability Info"-Nachricht in Form einer "UE Capability Info Confirm"-Nachricht zu senden. Auch diese wird von der Mobilstation 5 noch nach dem JD-Verfahren entzerrt und detektiert, da sie noch nicht in der Basisstation 1 vorverzerrt wurde und auf dem FACH an die Mobilstation 5 versendet wurde.

Über den FACH und den RACH werden im folgenden zwischen der Mobilstation 5 und der Basisstation 1 bzw. dem Mobilfunknetz die Parameter für die eigentliche Datenübertragung über den einzurichtenden gewidmeten Übertragungskanal bzw. über die einzurichtenden gewidmeten Übertragungskanäle für den eingehenden Ruf verhandelt. Dies ist in Figur 2 durch den Doppelpfeil "Direct Transfer" gekennzeichnet. Nach erfolgreicher Verhandlung und Festlegung der Parameter für die einzureichenden Übertragungskanäle über den "Direct Transfer" sendet die Basisstation 1 der Mobilstation 5 über den FACH Downlinkkanal eine "RAB Setup"-Nachricht (Radio Access Bearer). Der Aufbau einer solchen "RAB Setup"-Nachricht ist ebenfalls aus der genannten Veröffentlichung "RRC Protocol Specification" bekannt. Mit der "RAB Setup"-Nachricht teilt die Basisstation 1 der Mobilstation 5 die Konfiguration für den eigentlichen Nutzdatenverkehr mit. Die Konfiguration basiert dabei auf dem zuvor über den "Direct Transfer" ausgehandelten Parametern. Sowohl die über den "Direct Transfer" in der Mobilstation 5 empfangenen Signalisierungsinformationen als auch die "RAB Setup"-Nachricht werden von der Basisstation 1 zur Mobilstation 5 über den FACH übertragen und somit in der Mobilstation 5 noch nach dem JD-Verfahren entzerrt und detektiert. Die "RAB Setup"-Nachricht enthält unter anderem ein Nachrichtenelement mit dem Namen "Downlink Timeslot Info", welches der Mobilstation 5 den zu nutzenden Zeitschlitz für die Downlink Verbindung des einzurichtenden Übertragungskanals mitteilt. Bisher beinhaltet das Nachrichtenelement "Downlink Timeslot Info" als Information lediglich die Nummer des für den Downlink einzurichtenden Übertragungskanals von der Mobilstation 5 im Downlink zu nutzenden Zeitschlitzes, d. h. die Angabe, auf welchem Zeitschlitz die Mobilstation 5 Daten von der Basisstation 1 über den einzurichtenden Übertragungskanal im Downlink empfangen wird. Das Nachrichtenelement "Downlink Timeslot Info" ist dabei ebenfalls aus der genannten Veröffentlichung "RRC Protocol Specification" bekannt und in Tabelle 3 dargestellt.

**Tabelle 3**

| Parameter | Referenz | Typ | Bemerkung | |
|---|---|---|---|---|
| Zeitschlitznummer | | | Zu benutzender Zeitschlitz im Downlink (nur TDD) | Für jeden Zeitschlitz |

Zwischen der Basisstation 1 und der Mobilstation 5 können im Downlink mehrere gewidmete Übertragungskanäle in Form je eines der Mobilstation 5 zugewiesenen Zeitschlitzes eingerichtet werden. Die Bemerkung "für jeden Zeitschlitz" in dem Nachrichtenelement "Downlink Timeslot Info" bedeutet, dass für jeden zugewiesenen Zeitschlitz gleiche Bedingungen gelten.

Das Nachrichtenelement "Downlink Timeslot Info" ist ein optionales Nachrichtenelement der "RAB Setup"-Nachricht.

Die Basisstation 1 signalisiert im Nachrichtenelement "Downlink Timeslot Info" zusätzlich für jeden zugewiesenen Zeitschlitz die Information, ob die Daten in diesem Zeitschlitz an der Basisstation 1 gemäß dem JP-Verfahren für die Übertragung über den jeweils einzurichtenden Übertragungskanal vorverzerrt werden. Dabei können verschiedene zugewiesene Zeitschlitze unterschiedlich behandelt werden, d. h. Daten eines ersten zugewiesenen Zeitschlitzes können nach dem JP-Verfahren in der Basisstation 1 vorverzerrt werden und Daten eines zweiten zugewiesenen Zeitschlitzes werden in der Basisstation 1 nicht vorverzerrt. Das Nachrichtenelement "Downlink Timeslot Info" kann nun für jeden für den Downlink zugewiesenen Zeitschlitz des jeweils einzurichtenden Übertragungskanals angeben, ob die Daten in diesem Zeitschlitz an der Basisstation 1 nach dem JP-Verfahren vorverzerrt wurden oder nicht. Dabei kann es vorgesehen sein, dass im Nachrichtenelement "Downlink Timeslot Info" die Information, ob die Daten in einem für den Downlink zugewiesenen Zeitschlitz an der Basisstation 1 gemäß dem JP-Verfahren vorverzerrt wurden oder nicht, für mehrere zugewiesene Zeitschlitze zusammengefasst wird, wenn die Daten in diesen Zeitschlitzen an der Basisstation 1 hinsichtlich der Aufbereitung gleich behandelt werden.

Tabelle 4 gibt ein Beispiel für ein neues Nachrichtenelement "Downlink Timeslot Info" an.

**Tabelle 4**

| Parameter | Referenz | Typ | Bemerkung | |
|---|---|---|---|---|
| Zeitschlitznummer | | | Zu benutzender Zeitschlitz im Downlink (nur TDD) | Für jeden Zeitschlitz |
| JD/JP-Indikator | | | (nur TDD) | Für jeden Zeitschlitz |

Gemäß dem Beispiel nach Tabelle 4 teilt das Nachrichtenelement "Downlink Timeslot Info" der Mobilstation 5 mit, dass sämtliche Zeitschlitze, die für den jeweils einzurichtenden Übertragungskanal zwischen der Basisstation 1 und der Mobilstation 5 im Downlink der Mobilstation 5 zugewiesen werden, ausschließlich im TDD-Betrieb einer JP-Vorverzerrung bezüglich der in ihnen übertragenen Daten unterworfen werden.

Das in Figur 2 beschriebene Signalisierungsszenario ist für eine Aufbereitung der zu sendenden Daten an der Basisstation 1 mittels des JP-Verfahrens beispielhaft beschrieben. Es kann jedoch auch jede andere Art von Vorverzerrung oder Aufbereitung der zu sendenden Daten an der Basisstation 1 vorgesehen sein, durch die die Qualität des Empfangs dieser Daten an der Mobilstation 5 erhöht wird. Entsprechend muss dann die Art der Aufbereitung im neuen Nachrichtenelement "UE Mode Capability" bzw. im neuen Nachrichtenelement "Downlink Timeslot Info" angegeben werden.

Der Empfang der "RAB Setup"-Nachricht an der Mobilstation 5 erfolgt zu einem dritten Zeitpunkt t₃. Zwischen dem zweiten Zeitpunkt t₂ und dem dritten Zeitpunkt t₃ erfolgt der Signalisierungsaustausch zwischen der Basisstation 1 und der Mobilstation 5 über den FACH im Downlink und den RACH im Uplink, so dass die an der Mobilstation 5 empfangenen Signalisierungsinformationen noch mittels des JD-Verfahrens in diesem Beispiel entzerrt und detektiert werden. Nach Empfang der "RAB Setup"-Nachricht konfiguriert die Mobilstation 5 ihre physikalische Schicht und baut einen neuen physikalischen Uplink-Übertragungskanal von der Mobilstation 5 zur Basisstation 1 auf. Nach erfolgreicher Konfiguration sendet die Mobilstation 5 dann eine "RAB Configuration Complete"-Nachricht über den neu eingerichteten und gerade konfigurierten Uplink-Übertragungskanal an die Basisstation 1. Mittels der "RAB Configuration Complete"-Nachricht signalisiert dabei die Mobilstation 5 der Basisstation 1, dass sie diesen Uplink-Übertragungskanal von der Mobilstation 5 zur Basisstation 1 eingerichtet hat, der speziell der Übertragung von Daten von der Mobilstation 5 zur Basisstation 1 gewidmet ist.

Nach dem Senden der "RAB Setup"-Nachricht richtet die Basisstation 1 entsprechend einen Downlink-Übertragungskanal von der Basisstation 1 zur Mobilstation 5 ein, der speziell der Übertragung von Daten von der Basisstation 1 zur Mobilstation 5 gewidmet ist. Über die beiden eingerichteten Übertragungskanäle zwischen der Basisstation 1 und der Mobilstation 5 ist ein Halbduplex-TDD-Betrieb möglich, bei dem einer oder mehrere Zeitschlitze jeweils einen gewidmeten Uplink-Übertragungskanal und einer oder mehrere davon verschiedene Zeitschlitze jeweils einen gewidmeten Downlink-Übertragungskanal bilden. Aus den mit den Zeitschlitzen im jeweiligen Uplink-Übertragungskanal übertragenen Daten kann die Basisstation 1 eine Impulsantwort des jeweiligen Uplink-Übertragungskanals schätzen, wobei diese geschätzte Impulsantwort auch eine Schätzung für die Impulsantwort des mindestens einen Downlink-Übertragungskanals darstellt. Die Schätzung kann somit zur JP-Vorverzerrung der über den mindestens einen Downlink-Übertragungskanal von der Basisstation 1 zur Mobilstation 5 zu sendenden Daten in der Basisstation 1 genutzt werden. Alle Signalisierungsinformationen und Daten bzw. Nutzdaten, die die Mobilstation 5 von nun an von der Basisstation 1 empfängt, werden auf dem mindestens einen neuen Downlink-Übertragungskanal an der Mobilstation 5 empfangen. Das sind sowohl die eigentlichen Daten bzw. Nutzdaten des eingehenden Rufes als auch zusätzlich benötigte Signalisierungsdaten. Der mit "Data Exchange" bezeichnete Doppelpfeil zwischen der Mobilstation 5 und der Basisstation 1 kennzeichnet diesen Datenaustausch über die der Verbindung zwischen der Basisstation 1 und der Mobilstation 5 eigens gewidmeten Uplink- und Downlink-Übertragungskanäle. Die von der Basisstation 1 an die Mobilstation 5 zu sendenden Daten werden dabei zumindest für einen des mindestens einen Downlink-Übertragungskanals in der Basisstation 1 gemäß dem JP-Verfahren vorverzerrt und an die Mobilstation 5 übertragen, wo sie durch reinen Korrelationsempfang mittels den ersten Detektionsmitteln 30 detektiert werden.

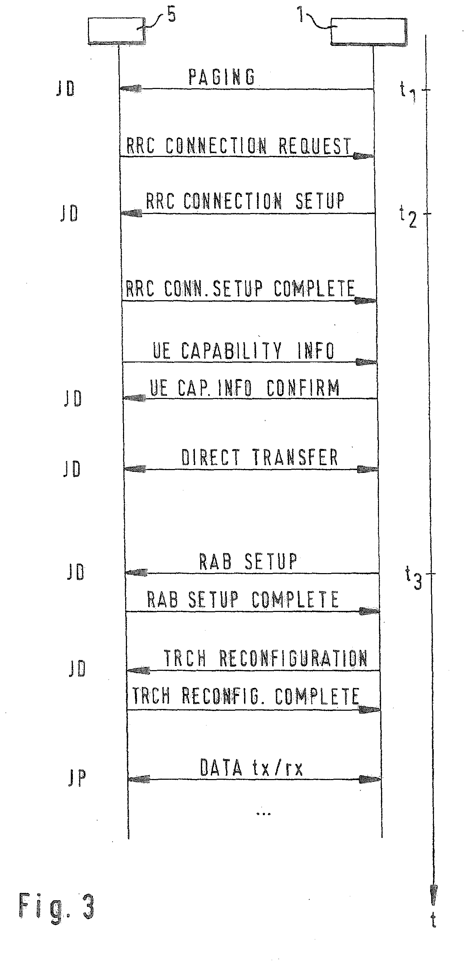

In einer zweiten Ausführungsform nach Figur 3 kann das beschriebene Signalisierungsszenario derart abgeändert werden, dass der Mobilstation 5 bereits zum zweiten Zeitpunkt t₂ mittels der "RRC Connection Setup"-Nachricht von der Basisstation 1 ein Uplink- und ein Downlink-Kanal zugewiesen wird, der fortan nur dem Austausch von Signalisierungsinformationen zwischen der Basisstation 1 und der Mobilstation 5 gewidmet ist. Die Mobilstation 5 quittiert die "RRC Connection Setup"-Nachricht mit einer an die Basisstation 1 gesendeten "RRC Connection Setup Complete"-Nachricht, die bereits über den neu eingerichteten Uplink-Kanal an die Basisstation 1 übertragen wird und dieser mitteilt, dass dieser Uplink-Kanal erfolgreich eingerichtet wurde. Dabei können sich die bereits zum zweiten Zeitpunkt t₂ der Mobilstation 5 zugewiesenen Uplink- und Downlink-Kanäle für die Übertragung der Signalisierungsinformationen von den zum dritten Zeitpunkt t₃ der Mobilstation 5 zugewiesenen Uplink- und Downlink-Übertragungskanälen zum Übertragen der Nutzdaten des eingehenden Rufes unterscheiden.

Es kann jedoch auch vorgesehen sein, die der Mobilstation 5 zum zweiten Zeitpunkt t₃ zugewiesenen Uplink- und Downlink-Kanäle auch für die ab dem dritten Zeitpunkt t₃ vorgesehene Nutzdatenübertragung für den eingehenden Ruf zu verwenden, wozu die zum zweiten Zeitpunkt t₂ eingerichteten Uplink- und Downlink-Kanäle zum dritten Zeitpunkt t₃ lediglich umkonfiguriert werden müssen. Die zweite Ausführungsform ist bezüglich der Variante mit Umkonfigurierung der Uplink- und Downlink-Kanäle in Figur 3 dargestellt.

Bei der zweiten Ausführungsform, die dadurch gekennzeichnet ist, dass bereits zum zweiten Zeitpunkt t₂ der Mobilstation 5 Uplink- und Downlink-Kanäle eigens zugewiesen werden, findet das JP-Verfahren dennoch nach wie vor ab dem dritten Zeitpunkt t₃ statt und wird wie beschrieben in der "RAB Setup"-Nachricht der Mobilstation 5 signalisiert. Bei Verwendung der zum zweiten Zeitpunkt t₂ der Mobilstation 5 zugewiesenen Uplink- und Downlink-Kanäle auch nach dem dritten Zeitpunkt t₃ kann die Signalisierung des von der Basistation 1 ab dem dritten Zeitpunkt t₃ verwendeten JP-Verfahrens der Mobilstation 5 auch bei der erforderlichen Umkonfigurierung der Uplink- und Downlink-Kanäle erfolgen, die nach Versenden der "RAB Setup Complete"-Nachricht von der Mobilstation 5 zur Basisstation 1 und vor Austausch der Nutzdaten gemäß Figur 3 erfolgt. Die für die Umkonfigurierung von der Basisstation 1 zur Mobilstation 5 zu übertragenden Signalisierungsinformationen werden dabei von der Basisstation 1 noch nicht vorverzerrt und somit in der Mobilstation 5 noch nach dem JD-Verfahren entzerrt und detektiert. Für die Umkonfigurierung wird dabei von der Basisstation eine "TRCH Reconfiguration"-Nachricht an die Mobilstation 5 versendet, die aus der genannten Vorveröffentlichung "RRC Protocol Specification" bekannt ist. Mit dieser "TRCH Reconfiguration"-Nachricht werden die Parameter, wie beispielsweise die Datenrate, der bereits zum zweiten Zeitpunkt t₂ der Mobilstation 5 zugewiesenen Uplink- und Downlink-Kanäle umkonfiguriert. Über einen solchermaßen umkonfigurierten Uplink-Kanal sendet die Mobilstation 5 anschließend eine "TRCH Reconfig. Complete"-Nachricht, mit der sie der Basisstation 1 die erfolgreiche Umkonfigurierung des Uplink-Kanals mitteilt. Anschließend kann dann der Nutzdatenaustausch des eingehenden Rufes zwischen der Basisstation 1 und der Mobilstation 5 über die rekonfigurierten Uplink- und Downlink-Kanäle erfolgen. Da, wie bei der ersten Ausführungsform beschrieben, bereits in der "RAB Setup"-Nachricht das Nachrichtenelement "Downlink Timeslot Info" Informationen über eine Vorverzerrung in der Basisstation 1 enthalten kann, könnte bereits die "TRCH Reconfiguration"-Nachricht in der Basisstation vorverzerrt werden, beispielsweise nach dem JP-Verfahren, so dass bereits diese Nachricht bei Empfang in der Mobilstation 5 durch reinen Korrelationsempfang detektiert werden könnte. Es könnte jedoch auch vorgesehen sein, das erfindungsgemäße "Downlink Timeslot Info"-Nachrichtenelement erst in die "TRCH Reconfiguration"-Nachricht zu integrieren, so dass die "TRCH Reconfiguration"-Nachricht in der Mobilstation 5 noch nach dem JD-Verfahren entzerrt und detektiert wird und erst der anschließend erfolgende Nutzdatenaustausch des eingehenden Rufes und gegebenenfalls zusätzlich auszutauschende Signalisierungsinformationen in der Mobilstation 5 durch reinen Korrelationsempfang detektiert werden können, da sie in der Basisstation 1 nach dem JP-Verfahren vorverzerrt werden. Dabei ist es bereits vorgesehen, dass die aus der genannten Veröffentlichung "RRC Protocol Specification" bekannte TRCH Reconfiguration"-Nachricht (TRCH = Transport Channel) das Nachrichtenelement "Downlink Timeslot Info" enthält, das die Mobilstation 5 u. a. darüber informiert, ob in der Basisstation 1 eine Aufbereitung, beispielsweise in Form einer Vorverzerrung der nachfolgend zu sendenden Daten, erfolgt.

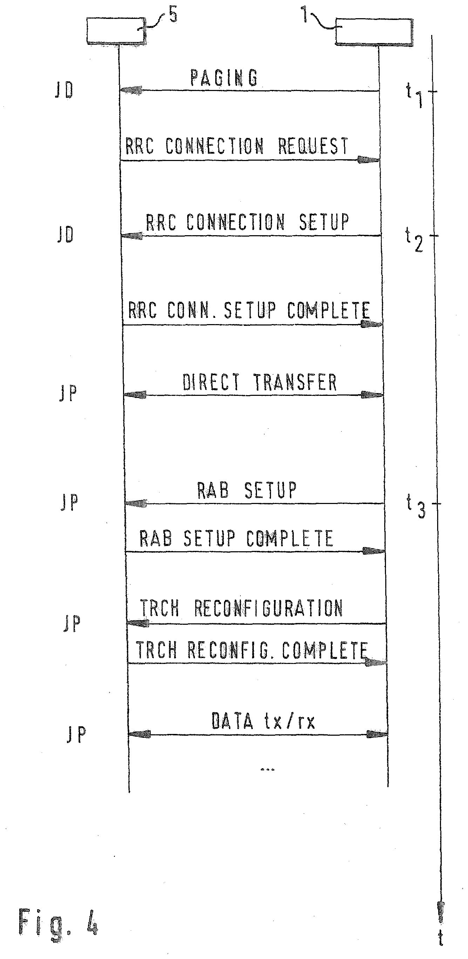

Da gemäß der zweiten Ausführungsform bereits ab dem zweiten Zeitpunkt t₂ ein der Übertragung von Signalisierungsinformationen von der Basisstation 1 zur Mobilstation 5 gewidmeter Downlink-Kanal vorgesehen ist, könnten bereits ab dem zweiten Zeitpunkt t₂ die von der Basisstation 1 zu sendenden Signalisierungsinformationen von der Basisstation 1 vorverzerrt werden, so dass sie in der Mobilstation 5 durch reinen Korrelationsempfang detektiert werden könnten, um Leistungsverbrauch in der Mobilstation 5 zum frühestmöglichen Zeitpunkt einzusparen. Ausgehend von der zweiten Ausführungsform ergibt sich daher eine dritte Ausführungsform gemäß Figur 4 dadurch, dass die Mobilstation 5 bereits in der "RRC Connection Request"-Nachricht ein Nachrichtenelement mit dem Namen "Initial UE Capability" an die Basisstation 1 sendet, das Informationen darüber enthält, ob die Mobilstation 5 eine Vorverzerrung, beispielsweise nach dem JP-Verfahren, oder eine sonstige Aufbereitung in der Basisstation 1 unterstützt. Die "RRC Connection Request"-Nachricht ist aus der genannten Veröffentlichung "RRC Protocol Specification" bekannt, genauso wie das zugehörige optionale Nachrichtenelement "Initial UE Capability". Dieses Nachrichtenelement "Initial UE Capability", welches bisher nicht mit Inhalt gefüllt ist, ist in Tabelle 5 dargestellt.

**Tabelle 5**

| Parameter | Referenz | Typ | Bemerkungen |
|---|---|---|---|
| | | | |

Dieses Nachrichtenelement kann gemäß der Erfindung wie in Tabelle 6 dargestellt abgewandelt werden:

**Tabelle 6**

| Parameter | Referenz | Typ | Bemerkungen |
|---|---|---|---|
| TDD-Modus (JP/JD) | | | Nur TDD-Modus |

In dem Beispiel nach Tabelle 6 teilt die Mobilstation 5 der Basisstation 1 mittels des neuen Nachrichtenelementes "Initial UE Capability" mit, dass es eine Vorverzerrung nach dem JP-Verfahren in der Basisstation 1 unterstützt. Dies erfolgt durch einen reinen Korrelationsempfang der empfangenen Daten. Die zum zweiten Zeitpunkt t₂ von der Basisstation 1 über den oben genannten FACH zur Mobilstation 5 übertragene "RRC Connection Setup"-Nachricht wird dann noch nicht vorverzerrt übertragen und in der Mobilstation 5 mittels des JD-Verfahrens entzerrt und detektiert. In dieser "RRC Connection Setup"-Nachricht ist jedoch wie bereits für die "TRCH Reconfiguration"-Nachricht beschrieben das Nachrichtenelement "Downlink Timeslot Info" vorgesehen, mittels dem die Basisstation 1 der Mobilstation 5 mitteilt, dass die Daten, die auf dem zur weiteren Signalisierung einzurichtenden gewidmeten Downlink-Kanal zur Mobilstation 5 in der Basisstation 1 nach dem JP-Verfahren vorverzerrt werden. Mit der "RRC Connection Setup"-Nachricht werden der Mobilstation 5 außerdem mindestens ein Downlink- und ein Uplink-Kanal für den weiteren Signalisierungsaustausch zugewiesen. Die Mobilstation 5 quittiert die "RRC Connection Setup"-Nachricht mit einer an die Basisstation 1 gesendeten "RRC Connection Setup Complete"-Nachricht, die bereits über den neu eingerichteten Uplink-Kanal an die Basisstation 1 übertragen wird und dieser mitteilt, dass dieser Uplink-Kanal erfolgreich eingerichtet wurde. Der Austausch der "UE Capability Info"-Nachricht und der "UE Capability Info Confirm"-Nachricht ist dann gemäß Figur 4 nicht mehr erforderlich, so dass anschließend dann in den zugewiesenen Uplink- und Downlink-Kanälen der "Direct Transfer" durchgeführt werden kann, wobei die von der Basisstation 1 an die Mobilstation 5 übertragenen Daten bereits nach dem JP-Verfahren vorverzerrt sind. Dies gilt auch für alle weiteren von der Basisstation 1 zur Mobilstation 5 für die aufgebaute Verbindung zu sendenden Signalisierungs-und Nutzdaten. Somit ist auch in der "RAB Setup"-Nachricht keine Information erforderlich, die die Mobilstation 5 über die JP-Vorverzerrung in der Basisstation 1 informiert. Eine solche Information ist jedoch in einer für eine gegebenenfalls erforderliche Umkonfigurierung der Uplink- und Downlink-Kanäle vorgesehenen "TRCH Reconfiguration" Nachricht erforderlich, da bei einer Umkonfigurierung der Mobilstation 5 eventuell neue Zeitschlitze zugewiesen werden.

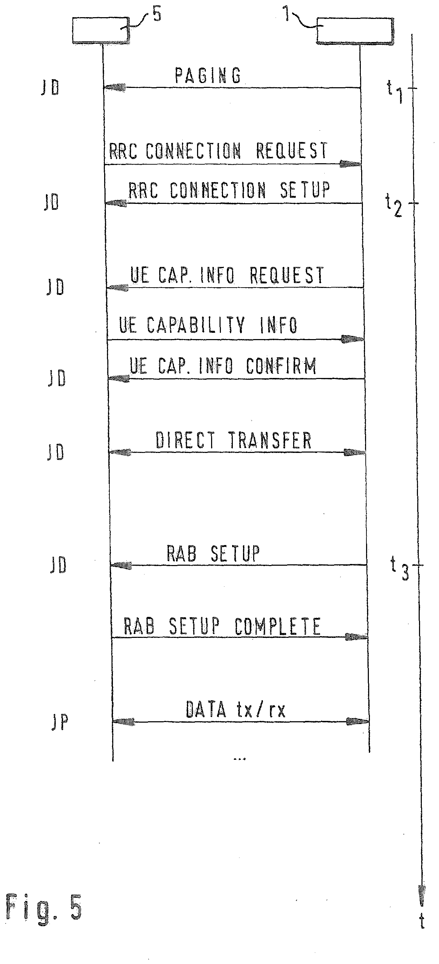

Gemäß Figur 5 ist eine vierte Ausführungsform dargestellt, die der ersten Ausführungsform entspricht, mit dem Unterschied, dass eine zusätzliche "UE Capability Information Request"-Nachricht eingeführt wurde, mit der die Basisstation 1 die Mobilstation 5 dazu veranlasst, die "UE Capability Information"-Nachricht an die Basisstation 1 zu versenden. Die "UE Capability Information Request"-Nachricht wird dabei von der Basisstation 1 im Anschluss an die "RRC Connection Setup"-Nachricht an die Mobilstation 5 versendet und dort ebenfalls nach dem Joint Detection Verfahren entzerrt und detektiert. Die "UE Capability Information Request"-Nachricht ist ebenfalls aus der genannten Veröffentlichung "RRC Protocol Specification" bekannt. In dieser "UE Capability Information Request"-Nachricht wird dabei normalerweise eine Information über den Typ der mit den Signalisierungsinformationen auszutauschenden Signalisierungsdaten zur Mobilstation 5 übertragen. Erfindungsgemäß könnte in der "UE Capability Information Request"-Nachricht ein Nachrichtenelement zusätzlich aufgenommen werden, das die Mobilstation 5 danach abfragt, welche Arten der Aufbereitung in der Basisstation 1 durch die Mobilstation 5 unterstützt werden. Dabei können in diesem zusätzlichen Nachrichtenelement oder einem weiteren zusätzlichen Nachrichtenelement der "UE Capability Information Request"-Nachricht auch Informationen darüber von der Basisstation 1 zur Mobilstation 5 übertragen werden, die angeben, welche Arten der Aufbereitung von zu sendenden Daten in der Basisstation 1 möglich sind. In dem hier beschriebenen Beispiel könnte in einem solchen zusätzlichen Nachrichtenelement beispielsweise angegeben werden, dass die vier vorbeschriebenen Arten der Aufbereitung durch die Basisstation 1 möglich sind, wenn man die Nichtaufbereitung auch als Aufbereitungsart mitzählt. Insbesondere könnte dabei in dem hier beschriebenen Beispiel für die mögliche Vorverzerrung in der Basisstation 1 das JP-Verfahren angegeben werden. Dieses zusätzliche Nachrichtenelement mit den Angaben von der Basisstation 1 unterstützten Arten der Aufbereitung der zu sendenden Daten entspricht dann, enthält oder ist enthalten in der gemäß Figur 1 beschriebenen ersten Nachricht.

Das oder die zusätzlichen Nachrichtenelemente können optional auch bereits mit der "RRC Connection Setup"-Nachricht von der Basisstation 1 an die Mobilstation 5 versendet werden, um die "UE Capability Information Request"-Nachricht einzusparen. Da in der "RRC Connection Setup"-Nachricht bereits das "Downlink Timeslot Info"-Nachrichtenelement übertragen wird, könnte oder könnten das oder die zusätzlichen Nachrichtenelemente auch als Bestandteil des "Downlink Timeslot Info"-Nachrichtenelementes übertragen werden, so dass in der "RRC Connection Setup"-Nachricht keine zusätzlichen Nachrichtenelemente erforderlich sind.

Diejenigen Nachrichtenelemente der beschriebenen ersten drei Ausführungsformen, die von der Basisstation 1 zur Mobilstation 5 übertragen werden und Informationen darüber enthalten, ob eine Aufbereitung der von der Basisstation 1 an die Mobilstation 5 zu sendenden Daten in der Basisstation 1 erfolgt, entsprechen somit der, enthalten die oder sind enthalten in der gemäß Figur 1 beschriebenen dritten Nachricht. Diejenigen Nachrichtenelemente, die von der Mobilstation 5 zur Basisstation 1 in den ersten drei vorgenannten Ausführungsformen übertragen werden und eine Information darüber enthalten, ob von der Mobilstation 5 eine Aufbereitung der von der Basisstation 1 zu sendenden Daten in der Basisstation 1 unterstützt wird, bzw. welche Art oder welche Arten einer solchen Aufbereitung in der Basisstation 1 von der Mobilstation 5 unterstützt werden entsprechen der, enthalten die oder sind enthalten in der gemäß Figur 1 beschriebenen zweiten Nachricht.

Bei den beschriebenen vier Ausführungsformen wurde nur beispielhaft angenommen, dass die Aufbereitung in der Basisstation 1 nach dem JP-Verfahren erfolgt. Es kann jedoch mittels der genannten Nachrichtenelemente jede beliebige Art von Aufbereitung der zu sendenden Daten in der Basisstation 1 signalisiert werden. Dabei kann die Signalisierung durch Setzen eines oder mehrerer Bits im entsprechenden Nachrichtenelement realisiert werden. Dabei kann vereinbart werden, dass ein gesetztes Bit in der dritten Nachricht für eine spezielle von der Basisstation 1 durchgeführte Art der Aufbereitung der zu sendenden Daten steht, wohingegen ein Nichtsetzen dieses Bits dafür steht, dass diese Art der Aufbereitung in der Basisstation 1 nicht durchgeführt wird. Ein gesetztes Bit in der zweiten Nachricht kann dahingehend vereinbart sein, dass eine spezielle Art der Aufbereitung der zu sendenden Daten von der Mobilstation 5 unterstützt wird. Ein Nichtsetzen dieses Bits bedeutet dann, dass diese Art der Aufbereitung von der Mobilstation 5 nicht unterstützt wird. Entsprechendes kann für die erste Nachricht vereinbart sein. Ein gesetztes Bit in der ersten Nachricht kann dahingehend vereinbart sein, dass eine spezielle Art der Aufbereitung der zu sendenden Daten von der Basisstation 1 unterstützt wird. Ein Nichtsetzen dieses Bits bedeutet dann, dass diese Art der Aufbereitung von der Basisstation 1 nicht unterstützt wird.

Zusätzlich kann die erste Nachricht an der Basisstation 1 mit einer generellen Systeminformation, wie sie aus der genannten Veröffentlichung "RRC Protocol Specification" bekannt ist, ständig bzw. in regelmäßigen Abständen an alle zum Mobilfunknetz gehörenden Mobilstationen ausgestrahlt werden. Diese erste Nachricht kann ein weiteres Nachrichtenelement beinhalten, welches den Mobilstationen anzeigt, ob bzw. welche Art oder Arten der Aufbereitung von zu sendenden Daten das Mobilfunknetz bzw. die zum Mobilfunknetz gehörende Basisstation 1 unterstützt. Dieses weitere Nachrichtenelement kann dabei gemäß Tabelle 6 ausgebildet sein, wird dann jedoch von der Basisstation 1 versendet und heißt dann beispielsweise "Base station capability information"-Nachrichtenelement.

Gemäß Figur 6 ist ein Teil des Mobilfunknetzes dargestellt, wobei die Sendestation 1 eine erste Basisstation darstellt, die eine erste Funkzelle 1000 aufspannt und wobei eine weitere Sendestation 2 vorgesehen ist, die eine zweite Basisstation darstellt und die eine zweite Funkzelle 2000 aufspannt, wobei die erste Funkzelle 1000 und die zweite Funkzelle 2000 einander benachbart sind und sich in einem Übergangsbereich 3000 leicht überlappen. Die Mobilstation 5 hat sich dabei gemäß Figur 6 innerhalb der ersten Funkzelle 1000 in den Übergangsbereich 3000 bewegt. Die Sendestation 1 stellt dann fest, dass die Mobilstation 5 bezüglich der zweiten Basisstation 2 Signale mit höherer Empfangsqualität austauschen kann als mit der ersten Basisstation 1. Die erste Basisstation 1 bereitet daher eine Übernahme der einzurichtenden oder der schon eingerichteten Verbindung durch die zweite Basisstation 2 vor. Eine solche Übernahme wird als "Handover" bezeichnet. Zur Vorbereitung und Organisation des Handover müssen zwischen der ersten Basisstation 1 und der zweiten Basisstation 2 entsprechende Signalisierungsinformationen ausgetauscht werden. Dabei kann es vorgesehen sein, dass die erste Basisstation 1 mit diesen Signalisierungsinformationen die dritte Nachricht zur Mobilstation 5 überträgt, die dann jedoch eine Information darüber enthält, ob nach erfolgtem Handover in der zweiten Basisstation 2 eine Aufbereitung der zu sendenden Daten zur Erhöhung der Empfangsqualität dieser Daten an der Mobilstation 5 durchgeführt wird und wenn ja nach welcher Art beziehungsweise nach welchen Arten diese Aufbereitung erfolgt. Auf diese Weise kann die Mobilstation 5 im Falle eines Handover vor dem Wechsel von der ersten Basisstation 1 zur zweiten Basisstation 2, das heißt vor Einrichtung eines gewidmeten Übertragungskanals zwischen der zweiten Basisstation 2 und der Mobilstation 5, in der beschriebenen Weise entscheiden, wie sie die von der zweiten Basisstation 2 zu sendenden Daten entzerren und detektieren muss, um einen optimalen Datenempfang gewährleisten zu können, bei dem möglichst wenig Leistung verbraucht wird. Die möglichen Arten der Aufbereitung der von der zweiten Basisstation 2 zu sendenden Daten entsprechen dabei beispielhaft den von der ersten Basisstation 1 unterstützten Arten, können jedoch auch davon verschieden sein. Es könnte von der zweiten Basisstation 2 auch nur eine Art der Aufbereitung unterstützt werden.

Vorzugsweise wird zur Übertragung von Signalisierungsinformationen zwischen einer Sendestation (1), insbesondere einer Basisstation, und einer Empfangsstation (5), insbesondere einer Mobilstation, mit den Signalisierungsinformationen eine dritte Nachricht von der Sendestation (1) an die Empfangsstation (5) übertragen, die eine Information darüber enthält, ob in der Sendestation (1) oder in einer nachfolgend der Empfangsstation (5) zugeordneten weiteren Sendestation (2), vorzugsweise beim Wechsel der Empfangsstation von einer ersten Funkzelle in eine zweite Funkzelle eines Funknetzes, eine Aufbereitung von zu sendenden Daten zur Erhöhung der Empfangsqualität dieser Daten an der Empfangsstation (5) durch Maßnahmen, die einen Übertragungskanal zwischen der Sendestation (1, 2) und der Empfangsstation (5) betreffen, durchgeführt wird.

Vorzugsweise wird mit der dritten Nachricht eine Information darüber von der Sendestation (1) an die Empfangsstation (5) übertragen, welcher Art die Aufbereitung der zu sendenden Daten ist.

Vorzugsweise wird die dritte Nachricht bezüglich genau eines Übertragungskanals für die Übertragung der zu sendenden Daten übertragen.

Vorzugsweise wird die dritte Nachricht bezüglich mehrerer Übertragungskanäle für die Übertragung der zu sendenden Daten übertragen, wenn die Art der Aufbereitung in diesen Übertragungskanälen gleich ist.

Vorzugsweise wird mit der dritten Nachricht eine Information darüber übertragen, ob die von der Sendestation (1) oder von der nachfolgend der Empfangsstation (5) zugeordneten weiteren Sendestation (2) zu versendenden Daten von einer Antenne (10) oder von mehreren Antennen (15) abgestrahlt werden.

Vorzugsweise wird mit der dritten Nachricht eine Information darüber übertragen, ob in der Sendestation (1) oder in der nachfolgend der Empfangsstation (5) zugeordneten weiteren Sendestation (2) eine Vorverzerrung der zu sendenden Daten, insbesondere nach einem Joint Predistortion ,JP, Verfahren, durchgeführt wird.

Vorzugsweise wird mit der dritten Nachricht eine Information darüber übertragen, ob eine Vorverzerrung in Abhängigkeit der geschätzten Impulsantwort mindestens eines Zeitschlitzübertragungskanals zwischen der Empfangsstation (5) und der Sendestation (1) oder der nachfolgend der Empfangsstation (5) zugeordneten weiteren Sendestation (2) durchgeführt wird.

Vorzugsweise wird mit den Signalisierungsinformationen vor der dritten Nachricht eine zweite Nachricht von der Empfangsstation (5) zur Sendestation (1) übertragen, die eine Information darüber enthält, welche Art oder welche Arten von Aufbereitung der von der Sendestation (1) zu sendenden Daten von der Empfangsstation (5) zur Detektion dieser Daten unterstützt wird beziehungsweise unterstützt werden.

Vorzugsweise werden die zu sendenden Daten in der Sendestation (1) in Abhängigkeit der zweiten Nachricht in einer Art aufbereitet, die von der Empfangsstation (5) zur Detektion der Daten unterstützt wird.

Vorzugsweise werden die so aufbereiteten zu sendenden Daten in einem Übertragungskanal übertragen, der nur der Verbindung zwischen der Sendestation (1) und der Empfangsstation (5) gewidmet ist.

Vorzugsweise werden als zu sendende Daten die Signalisierungsinformationen von der Sendestation (1) zur Empfangsstation (5) frühestens dann aufbereitet übertragen, wenn anhand der zweiten Nachricht die von der Empfangsstation (5) unterstützte Art beziehungsweise die von der Empfangsstation (5) unterstützten Arten der Aufbereitung bei der Sendestation (1) bekannt sind, wobei die Aufbereitung in einer von der Empfangsstation (5) unterstützten Art erfolgt, und wenn die dritte Nachricht an die Empfangsstation (5) abgesetzt wurde.

Vorzugsweise wird mit den Signalisierungsinformationen vor der dritten Nachricht eine erste Nachricht von der Sendestation (1) zur Empfangsstation (5) übertragen, die eine Information darüber enthält, welche Art oder welche Arten von Aufbereitung der zu sendenden Daten von der Sendestation (1) unterstützt wird beziehungsweise unterstützt werden.

Vorzugsweise wird die erste Nachricht in einem mehreren Empfangsstationen zugänglichen Übertragungskanal übertragen.

Vorzugsweise werden Signalisierungsinformationen frühestens nach Aussenden der dritten Nachricht aufbereitet von der Sendestation (1) oder von der nachfolgend der Empfangsstation (5) zugeordneten weiteren Sendestation (2) zur Empfangsstation (5) übertragen und werden die Signalisierungsinformationen zuvor in einem mehreren Empfangsstationen zugänglichen Übertragungskanal übertragen.

Vorzugsweise ist eine Empfangsstation (5) vorgesehen, insbesondere Mobilstation, zur Durchführung der vorherigen Schritte, wobei erste Auswertemittel (20) vorgesehen sind, die eine dritte Nachricht von einer Sendestation (1), insbesondere einer Basisstation, danach auswertet, ob von der Sendestation (1) oder von einer nachfolgend der Empfangsstation (5) zugeordneten weiteren Sendestation (2) an die Empfangsstation (5) zu sendende Daten zur Erhöhung der Empfangsqualität von der Sendestation (1) oder von der nachfolgend der Empfangsstation (5) zugeordneten weiteren Sendestation (2) durch Maßnahmen, die einen Übertragungskanal zwischen der Sendestation (1, 2) und der Empfangsstation (5) betreffen, aufbereitet wurden.

Vorzugsweise ist eine Empfangsstation (5) vorgesehen, wobei die ersten Auswertemittel (20) die dritte Nachricht danach auswerten, nach welcher Art die zu sendenden Daten von der Sendestation (1) oder von der nachfolgend der Empfangsstation (5) zugeordneten weiteren Sendestation (2) aufbereitet wurden.

Vorzugsweise ist eine Empfangsstation (5) vorgesehen, wobei erste Auswahlmittel (25) vorgesehen sind, die in Abhängigkeit der von den ersten Auswertemitteln (20) ausgewerteten dritten Nachricht Detektionsmittel (30, 35) auswählen, mit denen eine Detektion der von der Sendestation (1) oder von der nachfolgend der Empfangsstation (5) zugeordneten weiteren Sendestation (2) zu sendenden Daten möglich ist.

Vorzugsweise ist eine Empfangsstation (5) vorgesehen, wobei erste Nachrichtenerzeugungsmittel (40) vorgesehen sind, die in Abhängigkeit der von der Empfangsstation (5) unterstützten Art oder Arten der Aufbereitung von der Sendestation (1) zu sendenden Daten eine zweite Nachricht erzeugen und an die Sendestation (1) absetzen.

Vorzugsweise ist Empfangsstation (5) vorgesehen, wobei die ersten Auswertemittel (20) eine erste Nachricht von der Sendestation (1) dahingehend auswerten, welche Art oder welche Arten der Aufbereitung von zu sendenden Signalen die Sendestation (1) unterstützt, dass die ersten Auswertemittel (20) prüfen, ob diese Art oder diese Arten der Aufbereitung auch von der Empfangsstation (5) unterstützt wird beziehungsweise unterstützt werden und dass die ersten Auswertemittel (20) die ersten Nachrichtenerzeugungsmittel (40) derart ansteuern, dass mindestens eine Art der Aufbereitung in der zweiten Nachricht angegeben wird, die sowohl von der Sendestation (1) als auch von der Empfangsstation (5) unterstützt wird.

Vorzugsweise ist eine Sendestation (1), insbesondere Basisstation vorgesehen, zur Durchführung der vorherigen Schritte, wobei zweite Nachrichtenerzeugungsmittel (45) vorgesehen sind, die eine dritte Nachricht erzeugen, die Informationen darüber enthält, dass in der Sendestation (1) oder in einer nachfolgend der Empfangsstation (5) zugeordneten weiteren Sendestation (2) eine Aufbereitung von zu sendenden Daten zur Erhöhung der Empfangsqualität dieser Daten an einer Empfangsstation (5), insbesondere einer Mobilstation, durch Maßnahmen, die einen Übertragungskanal zwischen der Sendestation (1, 2) und der Empfangsstation (5) betreffen, durchgeführt wird, und dass die zweiten Nachrichtenerzeugungsmittel (45) die dritte Nachricht an die Empfangsstation (5) absetzen.

Vorzugsweise ist eine Sendestation (1) vorgesehen, wobei die zweiten Nachrichtenerzeugungsmittel (45) in der dritten Nachricht die Art der in der Sendestation (1) oder in der nachfolgend der Empfangsstation (5) zugeordneten weiteren Sendestation (2) durchgeführten Aufbereitung der zu sendenden Daten angeben.

Vorzugsweise ist eine Sendestation (1) vorgesehen, wobei die zweiten Nachrichtenerzeugungsmittel (45) vor Absetzen der dritten Nachricht eine erste Nachricht erzeugen, die Informationen über die von der Sendestation (1) unterstützte Art oder die von der Sendestation (1) unterstützten Arten der Aufbereitung von der Sendestation (1) zu sendenden Daten enthalten, und dass die zweiten Nachrichtenerzeugungsmittel (45) die erste Nachricht an die Empfangsstation (5) absetzen.

Vorzugsweise ist eine Sendestation (1) vorgesehen, wobei zweite Auswertemittel (50) vorgesehen sind, die eine zweite Nachricht von der Empfangsstation (5) dahingehend auswerten, welche Art oder welche Arten der Aufbereitung von zu sendenden Signalen die Empfangsstation (5) unterstützt, dass die zweiten Auswertemittel (50) prüfen, ob diese Art oder diese Arten der Aufbereitung auch von der Sendestation (1) unterstützt wird beziehungsweise unterstützt werden, dass die zweiten Auswertemittel (50) mindestens eine Art der Aufbereitung auswählen, die sowohl von der Sendestation (1) als auch von der Empfangsstation (5) unterstützt wird, dass die zweiten Auswertemittel (50) die zweiten Nachrichtenerzeugungsmittel (45) derart ansteuern, die mindestens eine ausgewählte Art der Aufbereitung in der dritten Nachricht anzugeben, und dass die zweiten Auswertemittel (50) eine Aufbereitungseinheit (55) so ansteuern, dass sie die zu sendenden Daten gemäß der mindestens einen ausgewählten Art aufbereitet.

Vorzugsweise ist eine Sendestation (1) vorgesehen, wobei die Aufbereitungseinheit (55) eine Vorverzerrung, insbesondere eine Joint Predistortion Vorverzerrung, durchführt.

Vorzugsweise ist eine Sendestation (1) vorgesehen, wobei die Aufbereitungseinheit (55) die zu sendenden Signale über mehrere Antennen (15) abstrahlt.

Vorzugsweise werden zur Versendung eines Nachrichtenelementes von einer Sendestation (1), insbesondere einer Basisstation, zu einer Empfangsstation (5), insbesondere einer Mobilstation, insbesondere im Rahmen eines Austauschs von Signalisierungsinformationen mit dem Nachrichtenelement Informationen darüber übertragen, ob zu versendende Daten zur Erhöhung der Empfangsqualität an der Empfangsstation (5) von der Sendestation (1) oder von einer nachfolgend der Empfangsstation (5) zugeordneten weiteren Sendestation (2) durch Maßnahmen, die einen Übertragungskanal zwischen der Sendestation (1, 2) und der Empfangsstation (5) betreffen, aufbereitet sind.

Vorzugsweise werden mit dem Nachrichtenelement Informationen darüber übertragen, nach welcher Art oder nach welchen Arten die zu versendenden Signale aufbereitet sind.

Vorzugsweise werden zur Versendung eines Nachrichtenelementes von einer Sendestation (1), insbesondere einer Basisstation, zu einer Empfangsstation (5), insbesondere einer Mobilstation, insbesondere im Rahmen eines Austauschs von Signalisierungsinformationen mit dem Nachrichtenelement Informationen darüber übertragen, welche Art oder welche Arten der Aufbereitung von zu versendenden Signalen von der Sendestation (1) oder von einer nachfolgend der Empfangsstation (5) zugeordneten weiteren Sendestation (2) unterstützt werden zur Erhöhung der Empfangsqualität an der Empfangsstation (5) durch Maßnahmen, die einen Übertragungskanal zwischen der Sendestation (1, 2) und der Empfangsstation (5) betreffen.

Vorzugsweise werden zur Versendung eines Nachrichtenelementes von einer Empfangsstation (5), insbesondere einer Mobilstation, zu einer Sendestation (1), insbesondere einer Basisstation, insbesondere im Rahmen eines Austauschs von Signalisierungsinformationen mit dem Nachrichtenelement Informationen darüber übertragen, welche Art oder welche Arten der Aufbereitung von der Sendestation (1) oder von einer nachfolgend der Empfangsstation (5) zugeordneten weiteren Sendestation (2) zu versendenden Signalen zur Erhöhung der Empfangsqualität an der Empfangsstation (5) durch Maßnahmen, die einen Übertragungskanal zwischen der Sendestation (1, 2) und der Empfangsstation (5) betreffen, von der Empfangsstation (5) bei der Detektion dieser Signale unterstützt werden.

## Patentansprüche

1. Mobilstation (5), mit ersten Auswertemitteln (20), die eine dritte Nachricht von einer Basisstation (1), danach auswerten, ob von einer nachfolgend der Mobilstation (5) zugeordneten weiteren Basisstation (2) an die Mobilstation (5) zu sendende Daten zur Erhöhung der Empfangsqualität von der Basisstation (1) oder von der nachfolgend der Mobilstation (5) zugeordneten weiteren Basisstation (2) durch Maßnahmen, die einen Übertragungskanal zwischen der Basisstation (1, 2) und der Mobilstation (5) betreffen, aufbereitet wurden und **dadurch gekennzeichnet, dass** die Mobilstation im Fall eines Handover vor dem Wechsel von der ersten Basisstation (1) zur weiteren Basisstation (2) entscheidet, wie sie die von der weiteren Basisstation (2) zu sendeten Daten detektieren muss.

2. Mobilstation (5) nach Anspruch 1, **dadurch gekennzeichnet, dass** die ersten Auswertemittel (20) die dritte Nachricht danach auswerten, nach welcher Art die zu sendenden Daten von der nachfolgenden der Mobilstation (5) zugeordneten weiteren Basisstation (2) aufbereitet wurden,

3. Mobilstation (5) nach Anspruchl oder 2, **dadurch gekennzeichnet, dass** die ersten Auswertemittel (20) vorgesehen sind, die dritte Nachricht von der Basisstation (1) für jeden einzurichtenden Übertragungskanal einzeln auszuwerten.

4. Mobilstation (5) nach einem der Ansprüche 1 bis 3, **dadurch gekennzeichnet, dass** die Arten der Aufbereitung zur Erhöhung der Empfangsqualität an der Mobilstation (5) ein Abstrahlen der von der Basisstation (1) zu versendenden Daten mit mehreren Sendeantennen in einem Sendediversitybetrieb umfassen.

5. Mobilstation (5) nach einem der Ansprüche 1 bis 4, **dadurch gekennzeichnet, dass** die Mobilstation (5) vor Einrichtung eines gewidmeten Übertragungskanals zwischen der weiteren Basisstation (2) und der Mobilstation (5) entscheidet, wie sie die von der weiteren Basisstation (2) zu sendeten Daten detektieren muss.

## Claims

1. Mobile station (5), having first evaluation means (20) that evaluate a third message from a base station (1) for whether data to be sent from a further base station (2) subsequently associated with the mobile station (5) to the mobile station (5) have been conditioned, to increase reception quality, by the base station (1) or by the further base station (2) subsequently associated with the mobile station (5) by measures that relate to a transmission channel between the base station (1, 2) and the mobile station (5) and **characterized in that** the mobile station, in the event of a handover, before the change from the first base station (1) to the further base station (2), decides how it needs to detect the data to be sent by the further base station (2).

2. Mobile station (5) according to Claim 1, **characterized in that** the first evaluation means (20) evaluate the third message for the manner in which the data to be sent have been conditioned by the further base station (2) subsequently associated with the mobile station (5).

3. Mobile station (5) according to Claim 1 or 2, **characterized in that** the first evaluation means (20) are provided to evaluate the third message from the base station (1) separately for each transmission channel to be set up.

4. Mobile station (5) according to one of Claims 1 to 3, **characterized in that** the manners of conditioning to increase the reception quality at the mobile station (5) comprise radiation of the data to be sent by the base station (1) by means of multiple transmission antennas in a transmission diversity mode.

5. Mobile station (5) according to one of Claims 1 to 4, **characterized in that** the mobile station (5), before setup of a dedicated transmission channel between the further base station (2) and the mobile station (5), decides how it needs to detect the data to be sent by the further base station (2).

## Revendications

1. Station mobile (5), comportant des premiers moyens d'évaluation (20) qui évaluent un troisième message provenant d'une station de base (1) pour déterminer si des données à émettre vers la station mobile (5) à partir d'une autre station de base (2) associée ensuite à la station mobile (5) ont été préparées à des fins d'amélioration de la qualité de réception par la station de base (1) ou par l'autre station de base (2) associée ensuite à la station mobile (5) par des mesures concernant un canal de transmission entre la station de base (1, 2) et la station mobile (5) et **caractérisée en ce qu'**en cas de transfert intercellulaire effectué avant le passage de la première station de base (1) à l'autre station de base (2), la station mobile décide comment elle doit détecter les données émises par l'autre station de base (2).

2. Station mobile (5) selon la revendication 1, **caractérisée en ce que** les premiers moyens d'évaluation (20) évaluent le troisième message pour déterminer le mode selon lequel les données à émettre ont été préparées par l'autre station de base (2) associée ensuite à la station mobile (5).

3. Station mobile (5) selon la revendication 1 ou 2, **caractérisée en ce que** les premiers moyens d'évaluation (20) sont prévus pour évaluer individuellement le troisième message provenant de la station de base (1) pour chaque canal de transmission à établir.

4. Station mobile (5) selon l'une des revendications 1 à 3, **caractérisée en ce que** les modes de préparation destinés à augmenter la qualité de réception au niveau de la station mobile (5) comprennent une transmission des données à émettre par la station de base (1) à l'aide d'une pluralité d'antennes d'émission dans un mode de diversité d'émission.

5. Station mobile (5) selon l'une des revendications 1 à 4, **caractérisée en ce que** la station mobile (5) décide, avant l'établissement d'un canal de transmission dédié entre l'autre station de base (2) et la station mobile (5), comment elle doit détecter les données devant être émises par l'autre station de base (2).
